# EUROPEAN PATENT SPECIFICATION

(11) **EP 2 733 612 B1**
(45) Date of publication and mention of the grant of the patent: **04.03.2015**
(21) Application number: 13177765.8
(22) Date of filing: 24.07.2013
(51) Int. Cl.: G06F 11/14

(54) **Information processing device, method, and program**
Informationsverarbeitungsvorrichtung, Verfahren sowie Programm
Dispositif, procédé et programme de traitement d' information

(30) Priority: 15.11.2012 JP 2012251320
(43) Date of publication of application: 21.05.2014
(73) Proprietor: Mitsubishi Electric Corporation, Chiyoda-ku Tokyo 100-8310 (JP)
(72) Inventor: Michihata, Satoshi, Tokyo, 100-8310 (JP); Maruyama, Kiyoyasu, Tokyo, 100-8310 (JP); Koike, Masahide, Tokyo, 100-8310 (JP)
(74) Representative: Hoffmann Eitle

(56) References cited:
- EP-A2- 0 536 793
- EP-A2- 1 770 513
- US-A1- 2003 126 511
- US-A1- 2009 077 423
- US-A1- 2010 180 108

## Description

### TECHNICAL FIELD

The present invention relates to an information processing device, method, and program.

### BACKGROUND ART

Recently NAND flash memory, a type of nonvolatile memory, has come into widespread use. Compared with flash memory of the NOR type, NAND flash memory has the advantages of higher capacity and lower cost per bit, but the disadvantage of inferior data reliability, because bit errors may occur due to leakage of charge over time, or over repeated reading of the stored data. In particular, if a system boot program is stored in NAND flash memory, the system may fail to boot (that is, fail to start up) because of such bit errors, or may hang up after being booted.

In Japanese Patent Application Publication No. 2010-26650, Otsuka describes a control device that reads a first boot program from a system nonvolatile memory and checks the first boot program for errors. If it decides that the first boot program has been improperly changed, it reads a second boot program from a backup nonvolatile memory and checks the second boot program for errors. If it decides that the second boot program has been improperly changed, it outputs an error notification. When it decides that the first or second boot program has not been improperly changed, it proceeds with boot processing.

A problem with this device is that the start of boot processing is delayed by the need to check the boot program for errors. Another problem is that, if an improper change occurs in the second boot program, the system cannot start up at all when an improper change also occurs in the first boot program.

Document EP 1 770 513 discloses a method of automatically updating software for recovering software components having an update error and recovering from the update error, the method comprising: determining whether an update of the components included in an update package is stopped; and if it is determined that the update is stopped, converting backup components of the components included in the update package into original components.

### SUMMARY OF THE INVENTION

In an aspect of the present invention, it is intended to provide an information processing device, method, and program that enable system booting to begin quickly and reduce the occurrence of situations in which the system cannot be booted.

According to an aspect of the present invention, there is provided an information processing device including: a nonvolatile memory having a first program data area storing first program data for booting a system, a second program data area storing second program data for booting the system, and a corrective data area storing corrective data identical in content to one of the first program data and the second program data for use when a fault is detected in the other one of the first program data and the second program data; the nonvolatile memory further having means for storing boot information specifying the first program data or the second program data as program data to use in booting the system, the boot information being preset to specify the other one of the first program data and the second program data; a boot unit for booting the system by executing the program data specified by the boot information; a fault detection unit for detecting faults in the specified program data in parallel with the booting of the system by the boot unit; an error correction unit for deciding, in parallel with the booting of the system by the boot unit, whether the corrective data agree with non-specified program data, the non-specified program data being first program data or second program data that are not specified by the boot information, detecting bit errors in the corrective data and the non-specified program data if the corrective data and the non-specified program data do not agree, and when a bit error is detected in one of the corrective data and the non-specified program data, using the data in which the bit error was not detected to correct the data in which the bit error was detected; and a reboot unit for, when the fault detection unit detects a fault in the specified program data, updating the boot information, thereby switching the specified program data, and then directing the boot unit to boot the system.

According to another aspect of the present invention, there is provided an information processing method including: booting a system by executing program data specified by boot information, the specified program data being stored in a nonvolatile memory, the nonvolatile memory having a first program data area storing first program data for booting the system, a second program data area storing second program data for booting the system, and a corrective data area storing corrective data identical in content to one of the first program data and the second program data for use when a fault is detected in the other one of the first program data and the second program data, the boot information specifying the first program data or the second program data as program data to use in booting the system and being preset to specify the other one of the first program data and the second program data; detecting faults in the specified program data in parallel with the booting of the system; deciding, in parallel with the booting of the system, whether the corrective data agree with non-specified program data, the non-specified program data being first program data or second program data that are not specified by the boot information, detecting bit errors in the corrective data and the non-specified program data if the corrective data and the non-specified program data do not agree, and when a bit error is detected in one of the corrective data and the non-specified program data, using the data in which the bit error was not detected to correct the data in which the bit error was detected; and updating the boot information, thereby switching the specified program data, when a fault is detected in the specified program data, and then booting the system again by executing the specified program data.

According to still another aspect of the present invention, there is provided a program executable by a computer to carry out: a boot process for booting a system by executing program data specified by boot information, the specified program data being stored in a nonvolatile memory, the nonvolatile memory having a first program data area storing first program data for booting the system, a second program data area storing second program data for booting the system, and a corrective data area storing corrective data identical in content to one of the first program data and the second program data for use when a fault is detected in the other one of the first program data and the second program data, the boot information specifying the first program data or the second program data as program data to use in booting the system and being preset to specify the other one of the first program data and the second program data; a fault detection process for detecting faults in the specified program data in parallel with the booting of the system; an error correction process for deciding, in parallel with the booting of the system, whether the corrective data agree with non-specified program data, the non-specified program data being first program data or second program data that are not specified by the boot information, detecting bit errors in the corrective data and the non-specified program data if the corrective data and the non-specified program data do not agree, and when a bit error is detected in one of the corrective data and the non-specified program data, using the data in which the bit error was not detected to correct the data in which the bit error was detected; and a reboot process for updating the boot information, thereby switching the specified program data, when the fault detection process detects a fault in the specified program data, and then booting the system again by executing the specified program data.

According to the present invention, it is possible to provide an information processing device, method, and program that enable system booting to begin quickly and reduce the occurrence of situations in which the system cannot be booted.

### BRIEF DESCRIPTION OF THE DRAWINGS

In the attached drawings:
FIG. 1 is a block diagram schematically showing the general configuration of the information processing device in a first embodiment of the invention;
FIG. 2 schematically shows the storage format in the nonvolatile memory in the first embodiment;
FIG. 3 schematically shows the format of control information in the first embodiment;
FIG. 4 is a block diagram illustrating the functional configuration of the information processing device in the first embodiment;
FIG. 5 is a flowchart illustrating the operation of the information processing device in the first embodiment;
FIG. 6 is a flowchart illustrating the reboot process in FIG. 5;
FIG. 7 is a flowchart illustrating the program replacement process in FIG. 6;
FIG. 8 is a flowchart illustrating a program update process in the first embodiment;
FIG. 9 schematically shows the storage format in the nonvolatile memory in a second embodiment;
FIG. 10 schematically shows the format of control information in the second embodiment; and
FIG. 11 is a flowchart illustrating the operation of the information processing device in the third embodiment.

### DETAILED DESCRIPTION OF THE INVENTION

Embodiments of the invention will now be described with reference to the attached drawings, in which like elements are indicated by like reference characters.

### First Embodiment

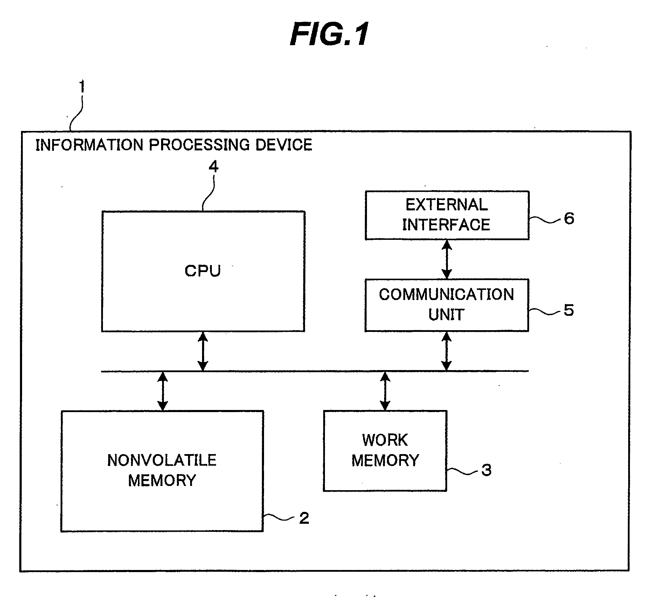

Referring to the block diagram in FIG. 1, the information processing device 1 in the first embodiment includes a nonvolatile memory 2, a work memory 3, a central processing unit (CPU) 4, a communication unit 5, and an external interface 6.

The nonvolatile memory 2 is a read-write memory, such as a NAND flash memory, for storing a variety of data. The nonvolatile memory 2 stores boot program data, backup program data, and corrective data.

The boot program data are executed to boot a system. If faults (bit errors, in this embodiment) are detected in the boot program data, backup program data are used to boot the system. The backup program data may be identical in content to the boot program data (the same version of the program, for example) or may differ in content from the boot program data (a different version of the program, for example). The corrective data are identical in content to the backup program data and are used to correct bit errors in the backup program data. In this embodiment, the corrective data are exactly identical to the backup program data, but the corrective data may differ in format from the backup program data if they are essentially identical and can be used to correct the backup program data. The corrective data may or may not be executable to boot the system. The system referred to above is a computer system, more specifically the computer system (based around the CPU 4) of the information processing device 1. The system, however, may be any system that is booted from the boot program data, possibly a system external to the information processing device 1.

The nonvolatile memory 2 further stores error detection data for detecting bit errors in the boot program data, backup program data, and corrective data. Bit errors in the data stored in the nonvolatile memory 2 are unintended changes in bits stored in the nonvolatile memory 2 and may occur due to leakage of charge over time.

In the description below, the boot program data and backup program data will often be referred to simply as the boot program and backup program.

The work memory 3 is used as a work area by the CPU 4 and stores data read from the nonvolatile memory 2. The work memory 3 is a random access memory (RAM), for example.

The CPU 4 executes programs such as the boot program stored in the nonvolatile memory 2. Specifically, the CPU 4 reads necessary program code and necessary data from the nonvolatile memory 2, writes (copies) them into the work memory 3, accesses the work memory 3, and executes processes described in the program code read into the work memory 3. Program code and other data are stored in and read from the nonvolatile memory 2 in blocks, for example.

When the CPU 4 communicates with an external device connected to the information processing device 1 via the external interface 6, the communication unit 5 converts the sent and received data in accordance with the communication protocol used to communicate with the external device.

The external interface 6 is an interface, such as a universal serial bus (USB) interface, through which the information processing device 1 is connected to the external device.

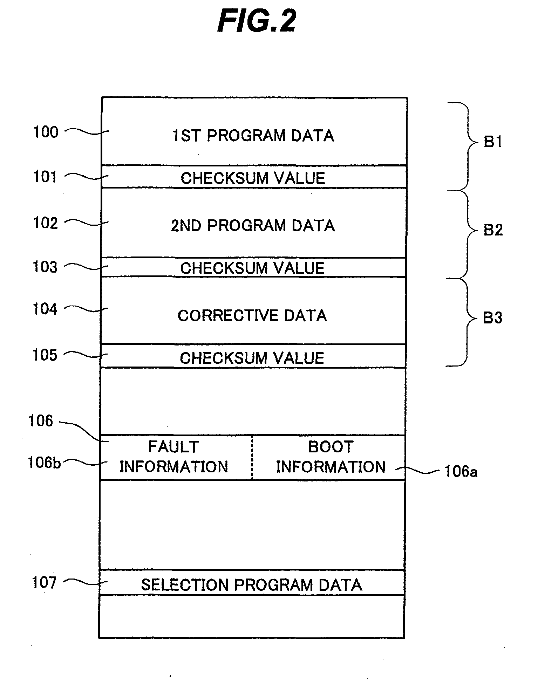

Referring to FIG. 2, the nonvolatile memory 2 includes blocks B1, B2, and B3, which are respectively a first program data area for storing first program data 100, a second program data area for storing second program data 102, and a corrective data area for storing corrective data 104. In the description below, the first program data 100 and second program data 102 will often be referred to simply as the program 100 and program 102, respectively.

The boot program is stored in one of blocks B1 and B2, and the backup program is stored in the other one of blocks B1 and B2. The corrective data are stored in block B3. For example, the boot program may be stored in block B1 and the backup program in block B2. In that case, program 100 is the boot program and program 102 is the backup program; the corrective data 104 are identical in content to program 102.

Respective checksum values 101, 103, and 105 are appended to program 100, program 102, and the corrective data 104 as corresponding error detection data. As shown in FIG. 2, program 100 and its checksum value 101 are stored in block B1; program 102 and its checksum value 103 are stored in block B2; and the corrective data 104 and their checksum value 105 are stored in block B3.

The nonvolatile memory 2 also stores control information 106. The control information 106 includes boot information 106a and fault information 106b. The boot information 106a specifies one of program 100 and program 102 as the program to be used to boot the system, that is, indicates whether to use program 100 or program 102 to boot the system. The boot information 106a is preset to specify program 100 or program 102 that are the boot program, that is, to specify which of programs 100 and 102 is used as the boot program. The fault information 106b indicates whether programs 100 and 102 include faults. The faults may be faults (bit errors, in this embodiment) detected by the fault detection unit 13, as described later, or bit errors detected but not corrected by the error correction unit 14, as described later.

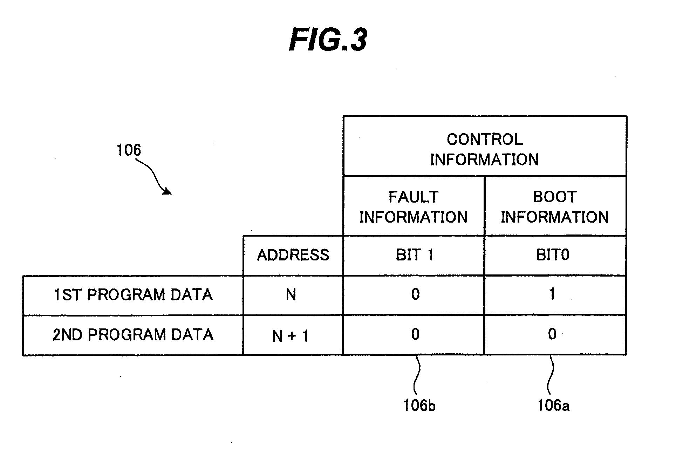

Referring to FIG. 3, the control information 106 is recorded at addresses N and N + 1 in the nonvolatile memory 2. The boot information 106a is recorded at bit 0 at addresses N and N + 1, and the fault information 106b at bit 1 at addresses N and N + 1. Information pertaining to program 100 is recorded at address N, and information pertaining to program 102 at address N + 1.

Bit 0 of the address N corresponding to program 100 indicates the following: when this bit is '0', program 100 is not used to boot the system; when this bit is '1', program 100 is used to boot the system. Bit 0 of the address N + 1 corresponding to program 102 indicates the following: when this bit is '0', program 102 is not used to boot the system; when this bit is '1', program 102 is used to boot the system.

Bit 1 of the address N corresponding to program 100 indicates the following: when this bit is '0', program 100 is free of faults; when this bit is '1', program 100 is faulty. Bit 1 of address N + 1 corresponding to program 102 indicates the following: when this bit is '0', program 102 is free of faults; when this bit is '1', program 102 is faulty.

In the example shown in FIG. 3, bit 0 at address N is '1' and bit 0 at address N + 1 is '0', indicating that program 100 is used to boot the system. Bits 1 at addresses N and N + 1 are both '0', indicating that programs 100 and 102 are free of faults.

Referring again to FIG. 2, the nonvolatile memory 2 further stores selection program data 107. The selection program data 107 are used to select which of programs 100 and 102 to use to boot the system. In the description below, the selection program data will be referred to simply as the selection program.

FIGs. 2 and 3 show examples of the storage format of data in the nonvolatile memory 2 and the format of the control information 106, but other formats may be used. The control information 106 and selection program 107 may be stored in a storage device other than the nonvolatile memory 2, such as a memory in which bit errors are less likely to occur. For example, the selection program 107 may be stored in a read-only memory (ROM).

The programs will now be described.

A program selection process for selecting program 100 or program 102 as the program to be used to boot the system is coded in the selection program 107. Specifically, the selection program 107 is coded so as to cause the CPU 4 to transfer the selection program 107 itself from the nonvolatile memory 2 to the work memory 3, to select program 100 or program 102 in accordance with the boot information 106a as the program to be used to boot the system, and then to jump to the address of the selected program.

Program 100 includes a boot process for booting the system, a fault detection process for detecting faults (bit errors, in this embodiment) in program 100, an error correction process for detecting and correcting bit errors in program 102, and a parallel control procedure for executing these processes in parallel. Specifically, program 100 is coded so as to cause the CPU 4 to transfer program 100 itself and its checksum value 101 from the nonvolatile memory 2 to the work memory 3, initialize the information processing device 1, and then boot the system. Program 100 also causes the CPU 4 to execute an error detection process by calculating a checksum from the program data for program 100 transferred to the work memory 3 and comparing the calculated checksum with checksum value 101 to find whether program 100 has any bit errors. This error detection process is executed in parallel with the boot process. Program 100 also causes the CPU 4 to execute an error correction process in which bit errors in program 102 and the corrective data 104 are detected and bit errors, if detected in one of program 102 and the corrective data 104, are corrected in accordance with the other of program 102 and the corrective data 104. This error correction process is also executed in parallel with the boot process.

Program 102 includes a boot process for booting the system, a fault detection process for detecting faults in program 102, an error correction process for correcting bit errors in program 100, and a parallel control procedure for executing these processes in parallel. Specifically, program 102 is coded so as to cause the CPU 4 to transfer program 102 itself and its checksum value 103 from the nonvolatile memory 2 to the work memory 3, initialize the information processing device 1, and boot the system. Program 102 also causes the CPU 4 to execute an error detection process by calculating a checksum from the program data of the program 102 transferred to the work memory 3 and comparing the calculated checksum value with checksum value 103 to find whether program 102 has any bit errors. This error detection process is executed in parallel with the boot process. Program 102 further causes the CPU 4 to execute an error correction process in which bit errors in program 100 and the corrective data 104 are detected and bit errors, if detected in one of program 100 and the corrective data 104, are corrected in accordance with the other one of program 100 and the corrective data 104. This error correction process is also executed in parallel with the boot process.

The programs 100 and 102 also include a reboot process for rebooting the system and a replacement control procedure for replacing the programs stored in the nonvolatile memory 2.

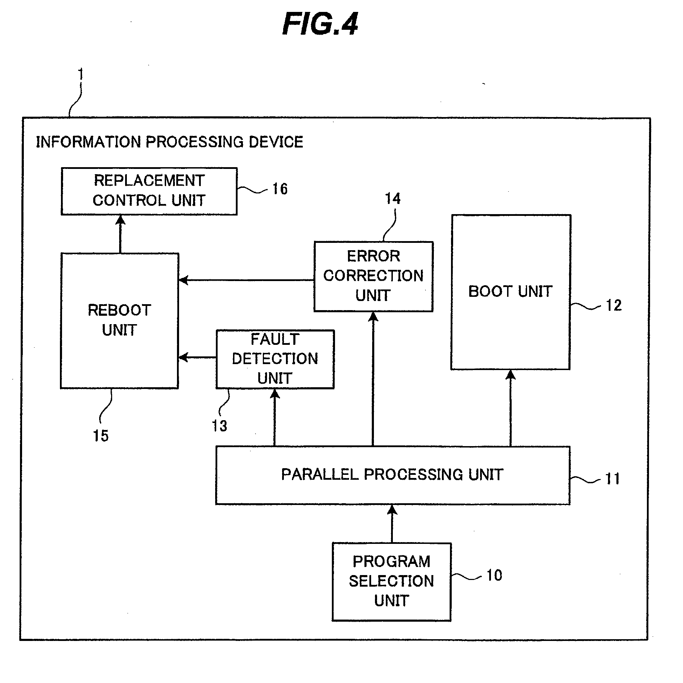

Referring to FIG. 4, the information processing device 1 includes a program selection unit 10, a parallel processing unit 11, a boot unit 12, a fault detection unit 13, an error correction unit 14, a reboot unit 15, and a replacement control unit 16.

In this embodiment, the program selection unit 10 is implemented by execution, by the CPU 4, of the program selection process coded in the selection program 107. The parallel processing unit 11, boot unit 12, fault detection unit 13, error correction unit 14, reboot unit 15, and replacement control unit 16 are implemented by execution, by the CPU 4, of the parallel control procedure, reboot process, fault detection process, error correction process, reboot process, and replacement control procedure coded in either program 100 or program 102, as selected by the program selection unit 10.

The program selection unit 10 selects program 100 or program 102 as the program to be used to boot the system, in accordance with the boot information 106a. The program selection unit 10 selects the program 100 or 102 specified in the boot information 106a as the program to be used to boot the system.

In the description below, the program 100 or 102 specified by the boot information 106a as the program to be used to boot the system will be referred to as the specified program, and the other program will be referred to as the non-specified program.

The parallel processing unit 11 controls time division parallel processing of a plurality of processes, including the boot process, fault detection process, and error correction process. Specifically, the parallel processing unit 11 controls the CPU 4 so that it executes a plurality of internal processes in parallel by dividing the processing time of the CPU 4 into small segments and assigning the small time segments to the processes in turn.

The boot unit 12 boots the system by executing the program selected by the program selection unit 10. Specifically, after the system reset, the boot unit 12 executes the boot process coded in the specified program stored in the nonvolatile memory 2.

In parallel with the booting of the system by the boot unit 12, the fault detection unit 13 detects faults in the specified program (the program selected by the program selection unit 10). In this embodiment, the fault detection unit 13 detects bit errors in the specified program, thus determining whether or not such bit errors are present. Specifically, the fault detection unit 13 performs bit error detection by using error detection data with respect to the specified program. More specifically, the fault detection unit 13 calculates a checksum value from the specified program stored in the nonvolatile memory 2, compares the calculated checksum value with the checksum value already stored in the nonvolatile memory 2 for the specified program, and decides that a bit error is present if the two checksum values do not agree. The fault detection unit 13 reports the result of this error detection process to the reboot unit 15.

The error correction unit 14 detects bit errors in the non-specified program (the program that is not selected by the program selection unit 10) when the system is booted by the specified program, and corrects any such bit errors, if possible, by using the corrective data 104.

In this embodiment, the error correction unit 14 executes the error correction process for detecting and correcting the bit errors in parallel with the booting of the system by the boot unit 12. The error correction unit 14 need not execute this process in parallel with the booting of the system, however; for example, it may execute the error correction process after the system is booted.

The error correction unit 14 detects bit errors in both the non-specified program and the corrective data 104. If a bit error is detected in the non-specified program, the error correction unit 14 corrects the bit error in the non-specified program, provided no bit error is detected in the part of the corrective data 104 corresponding to the bit error in the non-specified program. For example, the error correction unit 14 may detect bit errors in the entire corrective data 104 and correct the non-specified program when no bit error is detected in the corrective data 104. Alternatively, the error correction unit 14 may detect bit errors in a specific part of the corrective data 104 corresponding to the bit error in the non-specified program and may correct the non-specified program when no bit error is detected in the corresponding part.

If a bit error is detected in the corrective data 104, the error correction unit 14 corrects the bit error in the corrective data 104 in accordance with the non-specified program, provided no bit error is detected in the part of the non-specified program corresponding to the bit error in the corrective data 104. For example, the error correction unit 14 may correct the corrective data 104 when no bit error is detected in the entire non-specified program. Alternatively, the error correction unit 14 may decide whether a bit error is present in the part of the non-specified program corresponding to the bit error in the corrective data 104 and may correct the corrective data 104 when no bit error is present in that part.

The error correction unit 14 also determines whether the non-specified program agrees with (is identical to) the corrective data 104, and performs the above process for detecting and correcting bit errors when the two do not agree. For example, the error correction unit 14 compares the binary data of the non-specified program stored in the nonvolatile memory 2 with the binary data of the corrective data 104 to decide whether the two sets of binary data are in mutual agreement and performs the above process for detecting and correcting bit errors when it decides that the two sets of data do not agree.

When a bit error is detected in the non-specified program and is not corrected, the error correction unit 14 updates the fault information 106b to indicate that the non-specified program is faulty. For example, if a bit error detected in program 102 cannot be corrected, the error correction unit 14 changes bit 1 at address N + 1 in FIG. 3 from '0' to '1'.

If it is known from the fault information 106b that the non-specified program is already faulty, the error correction unit 14 does not execute the error correction process. For example, the error correction unit 14 refers to bit 1 of the address N + 1 corresponding to program 102 in FIG. 3: if this bit is '0', it executes the error correction process; if this bit is '1', it does not execute the error correction process.

If the fault detection unit 13 detects a fault in the specified program, the reboot unit 15 reboots the system by using the non-specified program in order to prevent, for example, the occurrence of a boot failure or hang-up. The reboot unit 15 reboots the system, changing the program to be used to boot the system from the specified program to the non-specified program.

Specifically, if a fault is detected in the specified program, the reboot unit 15 waits for the processing performed by the error correction unit 14 in parallel with the fault detection process to end, and then checks the fault information 106b to determine whether the non-specified program is faulty. If the non-specified program is free of faults, the reboot unit 15 updates the fault information 106b to indicate that the specified program is faulty, updates the boot information 106a to switch the specified program, and then directs the boot unit 12 to boot the system. If the non-specified program is faulty, the reboot unit 15 directs the replacement control unit 16 to execute a program replacement process, which will be described later.

The replacement control unit 16 performs a program replacement process that obtains a new program for booting the system, which is not already stored in the nonvolatile memory 2, from a source external to the information processing device 1 and replaces at least one of programs 100 and 102 with the new program. The program replacement process is executed if both programs 100 and 102 are faulty, that is, if a fault detected by the fault detection unit 13 or a bit error detected and not corrected by the error correction unit 14 is present in both programs.

In this embodiment, the replacement control unit 16 reboots the system with program 100 or 102 after replacing program 100, program 102, and the corrective data 104 with new programs. In an alternative scheme, after replacing program 100 and program 102 with new programs, the replacement control unit 16 reboots the system with program 100 or program 102, and if the reboot is successful, overwrites the corrective data 104 with the program that is not currently used for the boot.

The replacement control unit 16 also performs a program update process that updates the programs stored in the nonvolatile memory 2. In the program update process, after the boot unit 12 boots the system successfully, the replacement control unit 16 obtains a new program for booting the system, which is not already stored in the nonvolatile memory 2, from a source external to the information processing device 1, and replaces the non-specified program (the program that is not currently used for the boot) with the new program. After updating the boot information 106a to switch the specified program, the replacement control unit 16 then directs the boot unit 12 to boot the system again. If the fault detection unit 13 does not detect a fault during the boot, the replacement control unit 16 replaces the corrective data 104 with what is now the non-specified program (program 100 or 102, whichever was not replaced). If a fault is detected, the replacement control unit 16 updates the boot information 106a to switch the specified program and then directs the boot unit 12 to boot the system yet again.

In the program replacement process and program update process, the new program obtained from the external source by the replacement control unit 16 may be identical to one of the programs 100 and 102 currently stored in the nonvolatile memory 2, or may differ from both programs 100 and 102.

Before the program to be used to boot the system is switched by the reboot unit 15, the boot program is the specified program, and the backup program is the non-specified program in the information processing device 1. The boot unit 12 executes the boot program to boot the system; the fault detection unit 13 performs the fault detection process on the boot program; the error correction unit 14 performs bit error detection/correction on the backup program. If the fault detection unit 13 detects a fault in the boot program, the reboot unit 15 reboots the system with the backup program. Specifically, the reboot unit 15 changes the program to be used to boot the system from the boot program to the backup program and directs the boot unit 12 to boot the system. More precisely, when a fault is detected in the boot program, the reboot unit 15 checks whether the backup program has any bit errors that have been detected and have not been corrected by the error correction unit 14 and, if no such bit errors are present, reboots the system with the backup program. If the backup program has a bit error, the reboot unit 15 directs the replacement control unit 16 to perform the program replacement process.

After the program to be used to boot the system is switched by the reboot unit 15, the backup program becomes the specified program, and the boot program becomes the non-specified program. The boot unit 12 executes the backup program to boot the system, and the fault detection unit 13 checks the backup program for faults. If the fault detection unit 13 detects a fault in the backup program, the reboot unit 15 directs the replacement control unit 16 to execute the program replacement process.

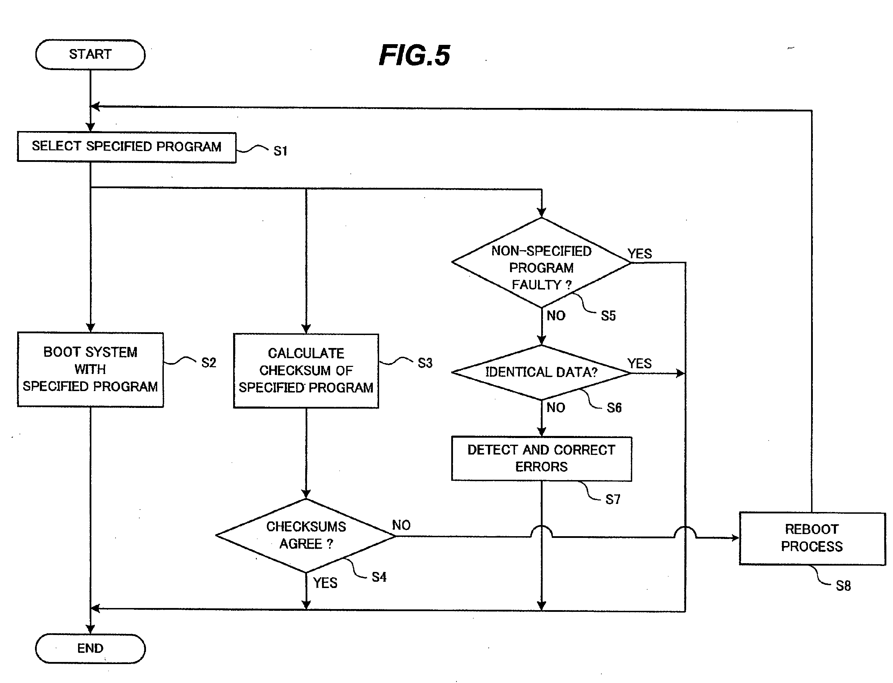

The operation of the information processing device 1 will now be described with reference to FIG. 5.

Upon being released from the reset state, the CPU 4 accesses a specified address (referred to below as the boot address) at which the selection program 107 is stored in the nonvolatile memory 2 and transfers the selection program 107 to the work memory 3. The CPU 4 then reads the selection program 107 from the work memory 3 and executes the program selection process coded in the selection program 107. In the program selection process, the CPU 4 refers to the control information 106 and selects the specified program as the program to be used to boot the system (S1). In the example shown in FIG. 3, since bit 0 at the address N corresponding to program 100 is '1', program 100 is selected. In this embodiment, the boot address is a fixed address.

Then, in accordance with instructions included in the selection program 107, the CPU 4 jumps to the address at which the specified program selected in step S1 is stored and transfers the specified program and its checksum value to the work memory 3. The CPU 4 reads the specified program from the work memory 3 and executes the boot process, including the initialization process, coded in the specified program (S2). In the example shown in FIG. 3, program 100 and its checksum value 101 are transferred to the work memory 3, and the boot process of program 100 is executed.

The CPU 4 also executes the parallel control procedure coded in the selected specified program, thereby executing the fault detection process coded in the specified program in parallel with the boot process in step S2. The CPU 4 calculates the checksum value of the specified program (S3) and checks whether the calculated checksum value agrees with the checksum value of the specified program stored in the nonvolatile memory 2. If the two checksum values do not agree (No in step S4), it decides that the specified program has a bit error (or unintended bit change) and proceeds to the reboot process (S8). The reboot process will be detailed later.

If the checksum values agree (Yes in step S4), the CPU 4 decides that the specified program is free of bit errors, allows the execution of the specified program to continue, and ends the fault detection process.

By executing the parallel control procedure coded in the specified program, the CPU 4 also carries out the following error correction process (steps S5 to S7) in parallel with the boot process in step S2.

In step S5, the CPU 4 refers to the control information 106 and decides whether a fault is already present in the non-specified program: if a fault is present (Yes in step S5), it ends the error correction process; if there is no fault (No in step S5), it proceeds to step S6. Specifically, the CPU 4 refers to bit 1 of the address N or N + 1 at which bit 0 is '0': if bit 1 is '1', it decides that a fault is present; if bit 1 is '0', it decides that no fault is present. In the example shown in FIG. 3, since bits 0 and 1 at address N + 1 are both '0', it is decided that no fault is present, and the process proceeds to step S6.

In step S6, the CPU 4 compares the non-specified program with the corrective data 104, ends the error correction process if they are identical (Yes in step S6), and proceeds to step S7 if they are not identical (No in step S6).

In step S7, the CPU 4 calculates the checksum values of the non-specified program and the corrective data 104. The CPU 4 checks whether the calculated checksum value of the non-specified program agrees with the checksum value stored for the non-specified program in the nonvolatile memory 2 and whether the calculated checksum value of the corrective data 104 agrees with the checksum value 105 stored for the corrective data 104 in the nonvolatile memory 2.

If the checksum value of just one of the non-specified program and the corrective data 104 does not agree, the CPU 4 overwrites whichever one of two (the non-specified program or the corrective data 104) has the non-matching (non-agreeing) checksum value with the other one of the two, which has a matching checksum value, and ends the error correction process.

If both the non-specified program and the corrective data 104 have non-matching checksum values, the CPU 4 updates the fault information 106b to indicate that the non-specified program is faulty and ends the error correction process. In the example in FIG. 3, program 102 is the non-specified program, so bit 1 of the address N + 1 corresponding to program 102 is changed from '0' to '1'.

Step S1 in FIG. 5 is implemented by execution, by the CPU 4, of the program selection process coded in the selection program 107. Step S2 is implemented by execution, by the CPU 4, of the boot process coded in the specified program. Steps S3 and S4 are implemented by execution, by the CPU 4, of the fault detection process coded in the specified program. Steps S5 to S7 are implemented by execution, by the CPU 4, of the error correction process coded in the specified program. Step S8 is implemented by execution, by the CPU 4, of the reboot process coded in the specified program. Step S1 is a process in the program selection unit 10; step S2 is a process in the boot unit 12; steps S3 and S4 are a process in the fault detection unit 13; steps S5 to S7 are a process in the error correction unit 14; and step S8 is a process in the reboot unit 15.

In the example shown in FIG. 5, the error correction process (steps S5 to S7) for detecting and correcting bit errors in the non-specified program is performed in parallel with the system boot process (step S2) and the fault detection process (steps S3 and S4). The error correction process may, however, be performed at a different time when the processing load on the CPU 4 is low, such as a time when the CPU 4 becomes idle after system booting ends.

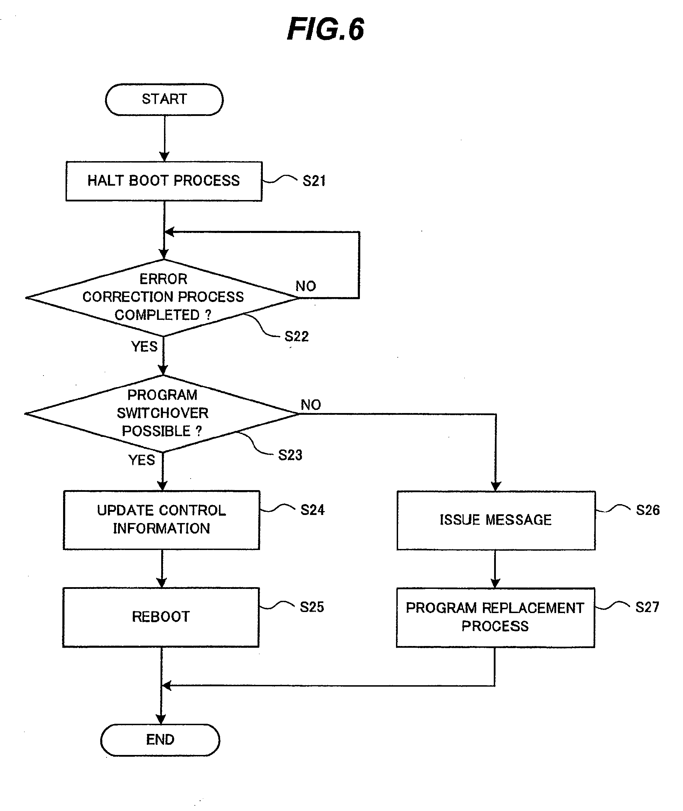

The reboot process in step S8 in FIG. 5 will now be described with reference to FIG. 6.

In step S21 in FIG. 6, the CPU 4 halts the boot process (step S2 in FIG. 5). The CPU 4 then waits in step S22 until the error correction process (steps S5 to S7 in FIG. 5) is completed. The wait continues as long as the result in step S22 is 'No'. When the error correction process ends (Yes in step S22), the CPU 4 proceeds to step S23.

In step S23, the CPU 4 refers to the control information 106 to decide whether it is possible to reboot by switching programs. Specifically, the CPU 4 checks whether the non-specified program is faulty: if the non-specified program is free of faults, it decides that rebooting by switching programs is possible; if the non-specified program is faulty, the CPU 4 decides that rebooting by switching programs is impossible. More specifically, the CPU 4 refers to bit 1 of the address N or N + 1 of the control information 106 having bit 0 set to '0': if bit 1 is '0', it decides that rebooting is possible; if bit 1 is '1', it decides that rebooting is impossible. In the example shown in FIG. 3, bits 0 and 1 of address N + 1 are both '0', so it is decided that rebooting by switching programs is possible.

When it is decided in step S23 that rebooting is possible (Yes in step S23), the CPU 4 updates the control information 106 to switch the specified program and to indicate that the program that was the specified program up till now is faulty (S24). Specifically, the values of bits 0 at addresses N and N + 1 are interchanged, and bit 1 of the address N or N + 1 having bit 0 set to '1' before the interchange is set to '1'. In the example shown in FIG. 3, bit 0 at address N + 1 is changed from '0' to '1'; bit 0 at address N is changed from '1' to '0'; and bit 1 at address N is changed from '0' to '1'.

When the updating of the control information 106 is completed, the CPU 4 reboots the system (S25). Specifically, the CPU 4 executes a software reset and performs the process illustrated in FIG. 5 from the beginning. In FIG. 5, the processing returns from step S8 to step S1, and the program selection process (S1), the system boot process (S2) using the selected program, the fault detection process (S3, S4), and the error correction process (S5 to S7) are performed again. In the example shown in FIG. 3, the control information 106 is updated in step S24 as described above, and a software reset is carried out. Since bit 0 at address N + 1 is now '1', program 102 is selected and used to execute the boot process.

When it is decided in step S23 that rebooting by switching the programs is impossible (No in step S23), the CPU 4 issues a message indicating that a new program must be obtained from an external source (S26), and proceeds to the program replacement process in order to replace the program data stored in the nonvolatile memory 2 (S27). The message is output to a display unit (not shown in the drawings). The program replacement process will now be described in detail.

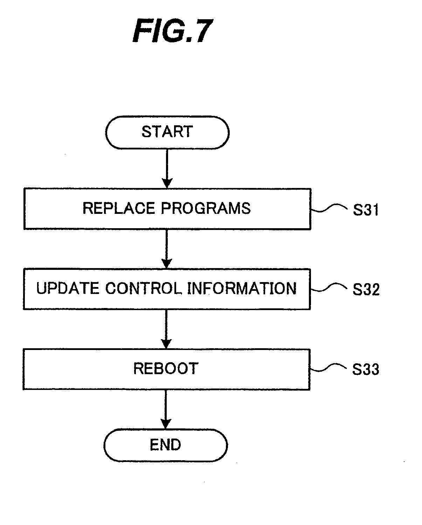

The program replacement process in step S27 in FIG. 6 will be described with reference to FIG. 7. The program replacement process is implemented by execution, by the CPU 4, of the replacement control procedure coded in the specified program.

In the program replacement process, when it recognizes that an external memory has been connected to the external interface 6, the CPU 4 reads a new program and its checksum value from the external memory through the communication unit 5 and replaces program 100 and its checksum value 101, program 102 and its checksum value 103, and the corrective data 104 and their checksum value 105 with the new program and its checksum value (S31). The external memory is a portable storage medium such as a USB memory that is connected to the external interface 6 of the information processing device 1 by a user who has seen the message output in step S26 in FIG. 6, for example. It will be appreciated that the CPU 4 may also obtain the new program in a different way: for example, from a program providing device through a network.

When the replacement is completed, the CPU 4 updates the control information 106 (S32). Specifically, the CPU 4 updates the fault information 106b to indicate that programs 100 and 102 are free of faults and updates the boot information 106a to specify either program 100 or 102. The CPU 4 here sets bits 1 at addresses N and N + 1 to '0', bit 0 at address N to '1', and bit 0 at address N + 1 to '0'. Alternatively, bit 0 at address N may be set to '0', and bit 0 at address N + 1 may be set to '1'.

When the updating of the control information 106 is completed, the CPU 4 reboots the system (S33). Specifically, the CPU 4 executes a software reset and performs the process illustrated in FIG. 5 from the beginning. In FIG. 5, the process flow returns from step S8 to step S1, and the program selection process (S1), the system boot process (S2) using the selected program, the fault detection process (S3, S4), and the error correction process (S5 to S7) are performed again. Here, since bit 0 at address N is '1', the program 100 corresponding to address N is selected and used to execute the boot process.

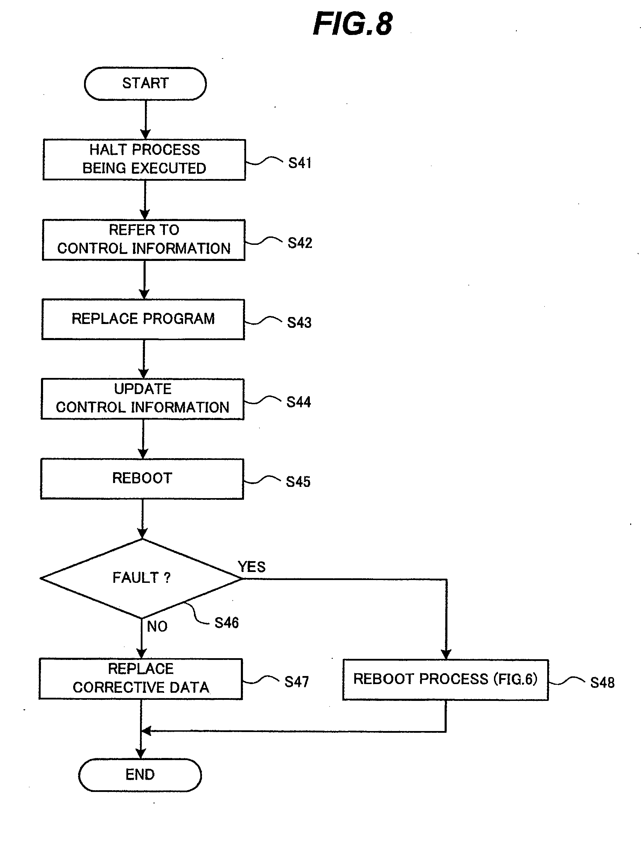

The program update process will now be described with reference to FIG. 8. Both programs 100 and 102 include the program update process. The program update process in FIG. 8 is implemented by execution, by the CPU 4, of the program update process coded in the specified program.

When it recognizes that an external memory has been connected to the external interface 6 after the system is booted normally, the CPU 4 halts the processing currently being executed (S41), refers to the control information 106 (S42), reads a new program and its checksum value from the external memory through the communication unit 5, and replaces the non-specified program and its checksum value with the new program and its checksum value (S43). For example, when bit 0 at address N is '1' and bit 0 at address N + 1 is `0', indicating that program 102 is the non-specified program, program 102 and its checksum value 103 are replaced with the new program and its checksum value. As part of step S41, whether the system has been booted normally is determined in step S41. This determination may be made by a boot completion notice, for example, as described below in the third embodiment.

When the program replacement is completed, the CPU 4 updates the control information 106 (S44). Specifically, the CPU 4 updates the boot information 106a to switch the specified program, so that the new program becomes the specified program, and updates the fault information 106b to indicate that the specified program (the new program) is free of faults. In the example given above, bit 0 at address N + 1 is set to '1'; bit 0 at address N is set to '0'; and bit 1 at address N + 1 is set to '0'. In this example, program 100 is a normal program that has booted the system normally, and bit 1 of the address N corresponding to program 100 is also '0'.

The CPU 4 next executes a software reset to reboot the system (S45) and performs the process illustrated in FIG. 5 from the beginning. The processing returns to step S1 in FIG. 5, and the program selection process (S1), the system boot process (S2) using the selected program, the fault detection process (S3, S4), and the error correction process (S5 to S7) are performed again. In the example under discussion, bit 0 at address N + 1 is '1', so program 102 is selected and used to execute the boot process. That is, the newly obtained program is used for the boot.

If no faults are detected in the specified program in the fault detection process performed in parallel with the boot process (No in step S46), the CPU 4 replaces the corrective data 104 and their checksum value 105 with the non-specified program and its checksum value (S47). In the example given above, bit 0 at address N is '0', so program 100 is the non-specified program, and the corrective data 104 and their checksum value 105 are replaced by program 100 and its checksum value 101.

If a fault is detected (Yes in step S46), the CPU 4 performs the reboot process (S48) illustrated in FIG. 6. In the reboot process, the program to be used to boot the system is switched, and the program 100 or 102 that was not updated in the program update process, and which has successfully booted the system in the past (program 100 in the example described above), is used for the reboot.

The following twelve effects are obtained from the embodiment described above.
(1) The information processing device described in this embodiment is configured to carry out two processes in parallel: one that boots the system by executing the boot program, and another that detects faults (bit errors, in this embodiment) in the boot program. Compared with waiting until the completion of the detection of faults (e.g., bit errors) in the boot program before starting the system boot process, the present embodiment enables system booting to start faster. One result is that the system startup screen can be displayed more quickly.
   As recent devices have become increasingly sophisticated, the amount of boot program data has been increasing greatly, increasing the time needed for detection of errors in the boot program. If the system boot process does not start until after boot program error detection is completed, the start of the system boot process is greatly delayed. The present embodiment solves this problem.
(2) The information processing device in this embodiment performs bit error detection on the backup program and, if bit errors are detected, corrects the bit errors with the corrective data. This correction of bit errors in the backup program can prevent the later occurrence of situations in which the system cannot be booted.
   Specifically, in the prior art taught by Otsuka, if an improper change occurs in the second boot program, the system cannot start up at all when an improper change also occurs in the first boot program. In this embodiment, however, bit errors occurring in the backup program can be detected and corrected, so that when a fault is detected in the boot program, the system can be booted reliably with the backup program. That is, the reliability of the backup program can be improved by correcting the bit errors, so that when a fault is detected in the boot program, a highly reliable program is immediately available for rebooting. Performing the error correction process periodically, such as once each time the system is booted, can also keep the backup program in a state of high reliability and reduce the likelihood of unsuccessful system rebooting from the backup program.
(3) The error correction unit detects bit errors in both the backup program and the corrective data and, when bit errors are detected in the backup program, corrects the bit errors in the backup program only if the corresponding part of the corrective data is free of bit errors. Therefore, the backup program will not be corrected improperly with erroneous data.
(4) The error correction unit detects bit errors in both the backup program and the corrective data and, when bit errors are detected in the corrective data, corrects the bit errors in the corrective data with the corresponding data taken from the backup program only if the corresponding part of the backup program is free of bit errors. Therefore, bit errors occurring in the corrective data can be corrected correctly, and the reliability of the corrective data can be improved.
(5) The error correction unit checks whether the backup program agrees with the corrective data. If it decides that they do not agree, it detects and corrects bit errors. If the processing load of the agreement check is lighter than the bit error detection processing load, the processing load on the error correction unit can be reduced and the processing time can be shortened.
(6) When a fault is detected in the boot program, the reboot unit decides whether the backup program includes any uncorrected bit errors detected by the error correction unit, and reboots the system by using the backup program only if the backup program is free of such bit errors. This makes it possible to reboot the system with a highly reliable backup program, free of bit errors.
(7) When a fault is detected in the boot program, the reboot unit decides whether the backup program includes any uncorrected bit errors detected by the error correction unit, and if any such bit errors are present, obtains a new program from an external source and replaces at least one of the boot program and the backup program with the new program. This makes it possible to boot the system with a new program obtained from the external source when the backup program includes a bit error.
(8) The error correction unit performs the error correction process in parallel with the boot process performed by the boot unit. If the fault detection unit detects a fault in the boot program, the reboot unit waits for the parallel processing being performed by the error correction unit to end before making the decision described in (6) and (7) above and proceeding to the following processing. Bit errors in the backup program are therefore detected and corrected promptly, before rebooting, and the system is rebooted with a program confirmed to be free of bit errors or a program in which bit errors have been corrected. This makes it possible to reboot the system with a backup program of higher reliability.
(9) When a fault is detected in the backup program, the reboot unit obtains new program data from the external source and replaces at least one of the boot program and the backup program with the new program data. This makes it possible to boot the system with a new program obtained from the external source.
(10) The nonvolatile memory has a first program area for storing a first program and a second program area for storing a second program, and the boot unit boots the system by executing the first or second program as specified in the boot information. When a fault is detected in the program used for booting, the reboot unit switches the specified program by updating the boot information and then directs the boot unit to boot the system again. The update of the boot information switches the program used to boot the system. The switchover processing load and processing time are greatly reduced in comparison with a configuration in which the program used to boot the system is changed by replacing the program data (such as a configuration in which the program used to boot the system is switched by overwriting the first program with the second program).
(11) When the fault detection unit detects a fault in the program, the reboot unit refers to the fault information and, if the non-specified program is free of faults detected by the fault detection unit and uncorrected bit errors detected by the error correction unit, updates the boot information to switch the specified program and directs the boot unit to boot the system. This makes it possible to reboot the system with a highly reliable program free of bit errors or faults. Specifically, programs in which faults have been detected by the fault detection unit and programs in which bit errors have been detected but not corrected by the error correction unit are excluded from use, so that rebooting can be performed with a highly reliable program.
(12) After the system is successfully booted, if the information processing device obtains a new program from the external source, it replaces the non-specified program with the new program, updates the boot information to switch the specified program, then directs the boot unit to boot the system. If the fault detection unit does not detect a boot fault, the corrective data is replaced with the non-specified program. If the fault detection unit detects a fault, the specified program is again switched and then the boot unit executes the boot process yet again. Thus when the program is updated, if a fault is detected in the new program after the update, the program formerly used for booting, before the update, can be restored. This prevents, when the newly obtained program cannot boot the system, a situation in which the former program cannot be restored and the system cannot be booted.

### Second Embodiment

A second embodiment will now be described. The information processing device in the second embodiment differs from the information processing device in the first embodiment only in regard to the control information used.

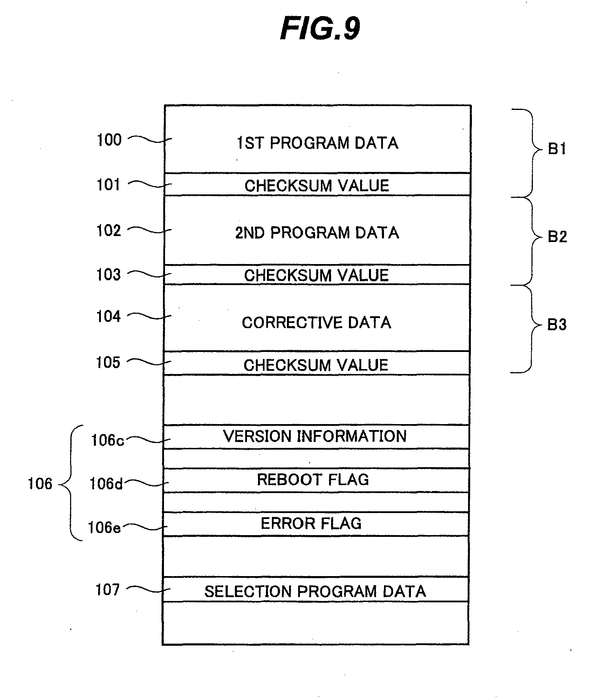

Referring to FIG. 9, the control information 106 in the second embodiment includes version information 106c, a reboot flag (reboot information) 106d, and an error flag (error information) 106e.

The version information 106c indicates the respective versions of programs 100 and 102. The reboot flag 106d is updated by the reboot unit 15 and indicates whether rebooting has been performed. The error flag 106e indicates whether at least one of programs 100 and 102 has an uncorrected bit error detected by the error correction unit 14.

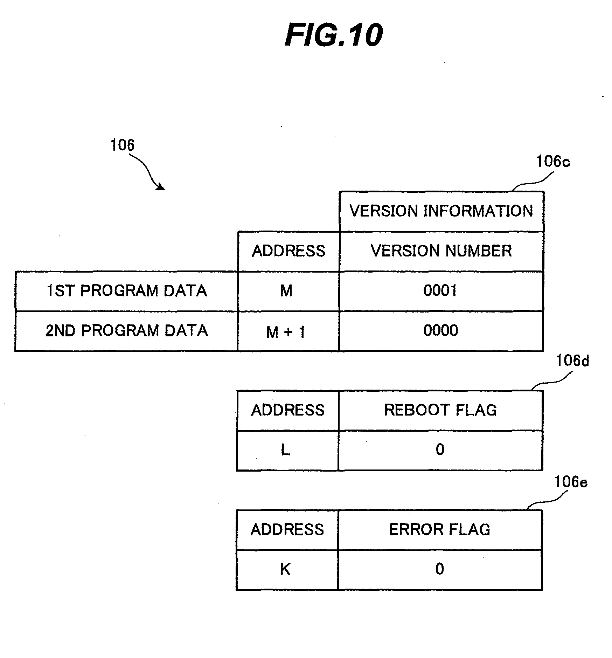

Referring to FIG. 10, the version information 106c is recorded at addresses M and M + 1 in the nonvolatile memory 2. The version number of program 100 is recorded at address M, and the version number of program 102 is recorded at address M + 1. In this embodiment, a higher version number represents a newer version, and a lower version number represents an older version. In the example shown in FIG. 10, the version number of program 100 is '0001' and the version number of program 102 is '0000', so program 100 is newer than program 102. The reboot flag 106d ('0' or '1') is recorded at address L, where '0' means 'not yet updated' (or not yet rebooted) and '1' means 'updated' (or rebooted). The error flag 106e ('0' or '1') is recorded at address K, where '0' means that no bit errors are present and '1' means that a bit error is present.

In this embodiment, when the reboot flag 106d is '0', the program selection unit 10 selects the program 100 or 102 the version of which satisfies a specified condition; when the reboot flag 106d is '1', the program selection unit 10 selects the program 100 or 102 the version of which does not satisfy the specified condition. In this embodiment, the specified condition is being the newer of the two versions. If the reboot flag 106d is '0', the program selection unit 10 selects whichever of the programs 100, 102 has the newer (higher) version number; if the reboot flag 106d is '1', it selects the program with the older (lower) version number.

If the programs 100 and 102 have identical version numbers, then when the reboot flag 106d is '0', the program selection unit 10 selects the program 100 or 102 that satisfies a specified condition concerning the addresses of programs 100 and 102 in the nonvolatile memory 2; if the reboot flag 106d is '1', the program selection unit 10 selects the program 100 or 102 that does not satisfy the specified condition. In this embodiment, the specified condition is having the lower address (or block number). Accordingly, if the reboot flag 106d is '0', program 100 is selected; if the reboot flag 106d is '1', program 102 is selected.

As described above, the version information 106c and the reboot flag 106d function as boot information that specifies the program to be used to boot the system. If the reboot flag 106d is '0', the program with the newer version number becomes the specified program; if the reboot flag 106d is '1', a program with the older version number becomes the specified program.

If the fault detection unit 13 detects a fault in the program, when the reboot flag 106d is '0' and the error flag 106e indicates that no bit errors are present, the reboot unit 15 updates the reboot flag 106d and directs the boot unit 12 to boot the system. When the reboot flag 106d is '1' or when the error flag 106e indicates that a bit error is present, the reboot unit 15 directs the replacement control unit 16 to execute the program replacement process.

The operation of the information processing device in the second embodiment will now be described with reference to FIG. 5.

Upon being released from the reset state, the CPU 4 executes the program selection process coded in the selection program 107. In the program selection process, the CPU 4 refers to the version information 106c and the reboot flag 106d and selects the specified program as the program to be used to boot the system. In the example shown in FIG. 10, the reboot flag 106d is '0', and program 100 is selected because its version is newer.

The CPU 4 transfers the selected specified program and its checksum value to the work memory 3 and executes the boot process coded in the specified program (S2), as in the first embodiment.

In parallel with the boot process in step S2, the CPU 4 calculates the checksum value of the specified program (S3) as in the first embodiment. The CPU 4 checks whether the calculated checksum value agrees with the checksum value stored in the nonvolatile memory 2 and, if these checksum values disagree (No in step S4), proceeds to the reboot process (S8). The reboot process will be described later in detail. If the checksum values are the same (Yes in step S4), the CPU 4 ends the fault detection process.

In parallel with the boot process in step S2, the CPU 4 also performs the following error correction process (steps S5 to S7).

In step S5, the CPU 4 refers to the reboot flag 106d and error flag 106e and decides whether a fault is already present in the non-specified program. Specifically, if at least one of the reboot flag 106d and the error flag 106e is '1', the CPU 4 decides that a fault is present (Yes in step S5) and ends the error correction process. If both the reboot flag 106d and the error flag 106e are '0', the CPU 4 decides that there is no fault (No in step S5) and proceeds to step S6.

In step S6, the CPU 4 compares the non-specified program and the corrective data 104, ends the error correction process if these data are identical (Yes in step S6), and proceeds to step S7 if they are not identical (No in step S6), as in the first embodiment.

In step S7, the CPU 4 calculates the checksum values of the non-specified program and the corrective data 104. The CPU 4 checks whether the calculated checksum value of the non-specified program agrees with the corresponding checksum value stored in the nonvolatile memory 2 and whether the calculated checksum value of the corrective data 104 agrees with the corresponding checksum value 105 stored in the nonvolatile memory 2.

If the checksum value of just one of the non-specified program and the corrective data 104 does not agree, the CPU 4 overwrites whichever one of two (the non-specified program and the corrective data 104) has the non-matching checksum value with the other one of the two, which has a matching checksum value, and ends the error correction process.

If both the non-specified program and the corrective data 104 have non-matching checksum values, the CPU 4 updates the error flag 106e to '1' and ends the error correction process.

The reboot process (step S8 in FIG. 5) in the second embodiment will now be described with reference to FIG. 6.

The CPU 4 halts the boot process (S21), waits until the error correction process ends (No in step S22) and, when the error correction process ends (Yes in step S22), proceeds to step S23.

In step S23, the CPU 4 refers the reboot flag 106d and the error flag 106e to decide whether it is possible to reboot by switching programs. Specifically, when the reboot flag 106d and the error flag 106e are both '0', the CPU 4 decides that rebooting is possible; when at least one of the two flags is '1', it decides that rebooting is impossible.

When it is decided in step S23 that rebooting is possible (Yes in step S23), the CPU 4 updates the reboot flag 106d to '1' (S24) and reboots the system (S25). Specifically, the CPU 4 executes a software reset and performs the process illustrated in FIG. 5 from the beginning. In the example shown in FIG. 10, when a software reset is carried out after the reboot flag 106d has been updated to '1', program 102 is selected, and the boot process is executed with program 102.

When it is decided in step S23 that rebooting is impossible (No in step S23), the CPU 4 outputs a message (S26) and proceeds to the program replacement process (S27).

The program replacement process (S27 in FIG. 6) in the second embodiment will now be described with reference to FIG. 7.

The CPU 4 reads a new program and its checksum value from an external memory and replaces program 100 and its checksum value 101, program 102 and its checksum value 103, and the corrective data 104 and their checksum value 105 with the new program and its checksum value (S31), as in the first embodiment.

When the replacement is completed, the CPU 4 updates the reboot flag 106d and the error flag 106e to '0' and updates the version numbers of programs 100 and 102 in the version information 106c to indicate the version of the newly obtained program (S32).

When the update of the control information 106 is completed, the CPU 4 reboots the system (S33). Specifically, the CPU 4 executes a software reset and performs the process illustrated in FIG. 5 from the beginning.

In the example shown in FIG. 10, after the version numbers of programs 100 and 102 are updated to '0002' in step S32, a software reset is carried out in step S33; then program 100 is selected to execute the boot process.

The program update process in the second embodiment will now be described with reference to FIG. 8.

After the system has been booted normally, when the CPU 4 recognizes that an external memory is connected, it halts the processing currently being executed (S41), refers to the version information 106c and reboot flag 106d (S42), reads a new program and its checksum value from the external memory, and replaces the non-specified program and its checksum value with the new program and its checksum value (S43). In the example shown in FIG. 10, the reboot flag 106d is '0', and the program 102 with the older version is replaced with the new program.

When the program replacement is completed, the CPU 4 updates the control information 106 (S44). Specifically, the CPU 4 updates the version number of the non-specified program (replaced program) in the version information 106c to indicate the version of the newly obtained program and changes the reboot flag 106d and error flag 106e to '0'. In the example shown in FIG. 10, the version number of the new program is written at the address M + 1 corresponding to program 102. In this example, the new program has a newer version number than the programs 100 and 102 originally stored in the nonvolatile memory 2, and '0002' is written at address M + 1, for example. Program 100 is a normal program that has booted the system normally.

The CPU 4 then reboots the system (S45) by executing a software reset and performs the process illustrated in FIG. 5 from the beginning. In the example given above, the program 102 with the newer version number is selected to execute the boot process. That is, booting is performed with the newly obtained program.

If no faults are detected in the specified program in the fault detection process performed in parallel with the boot process (No in step S46), the CPU 4 replaces the corrective data 104 and their checksum value 105 with the non-specified program and its checksum value (S47). In the example given above, the reboot flag 106d is '0', and the program 100 having the older version number is the non-specified program. The corrective data 104 and their checksum value 105 are replaced with program 100 and its checksum value 101.

If a fault is detected (Yes in step S46), the CPU 4 performs the reboot process (S48) illustrated in FIG. 6. In the reboot process, the program used to boot the system is switched, and rebooting is performed with the program 100 or 102 that has not been replaced in the program update process, i.e., the program that has booted the system normally in the past (program 100 in the example given above).

The effects (1) to (10) and (12) described earlier and the following effect (13) are obtained in the second embodiment.
(13) When the fault detection unit detects a fault in the program, if the reboot flag is '0' and the error flag indicates that no bit errors are present, the reboot unit updates the reboot flag and directs the boot unit to boot the system. Accordingly, when the fault detection unit detects a program fault, the system can then be rebooted with a highly reliable program. Specifically, the system can be rebooted with a highly reliable program because a program in which a fault has been detected by the fault detection unit or in which an uncorrected bit error has been detected by the error correction unit will not be used.

### Third Embodiment

A third embodiment will now be described. The information processing device in the third embodiment differs from the information processing device in the first embodiment only in that a system boot failure is detected as a program fault.

In this embodiment, as a fault in the specified program (the program selected by the program selection unit 10), the fault detection unit 13 detects a failure of the system to boot (or a failure of the system to boot normally).

Specifically, the boot unit 12 is configured to output a boot completion notice to the fault detection unit 13 when system booting is completed. The fault detection unit 13 measures the time elapsed from the start of execution of the specified program and decides that a system boot failure has occurred if the elapsed time reaches a preset threshold time before the boot unit 12 outputs the boot completion notice. A threshold time that is sufficiently longer than the time normally needed to boot the system is used here to decide whether a system boot failure has occurred (or whether the system has booted normally). The fault detection unit 13 may, however, detect system boot failures in other ways. For example, the boot unit 12 may be configured to output a signal periodically to the fault detection unit 13 during the boot process; the fault detection unit 13 may then decide that a system boot failure has occurred if it detects an interval longer than a preset interval between successive outputs of this signal from the boot unit 12, that is, if it detects a pause in signal output. Alternatively, the fault detection unit 13 may detect a system boot failure when it receives an error signal indicating an abnormal condition in the boot process from the boot unit 12.

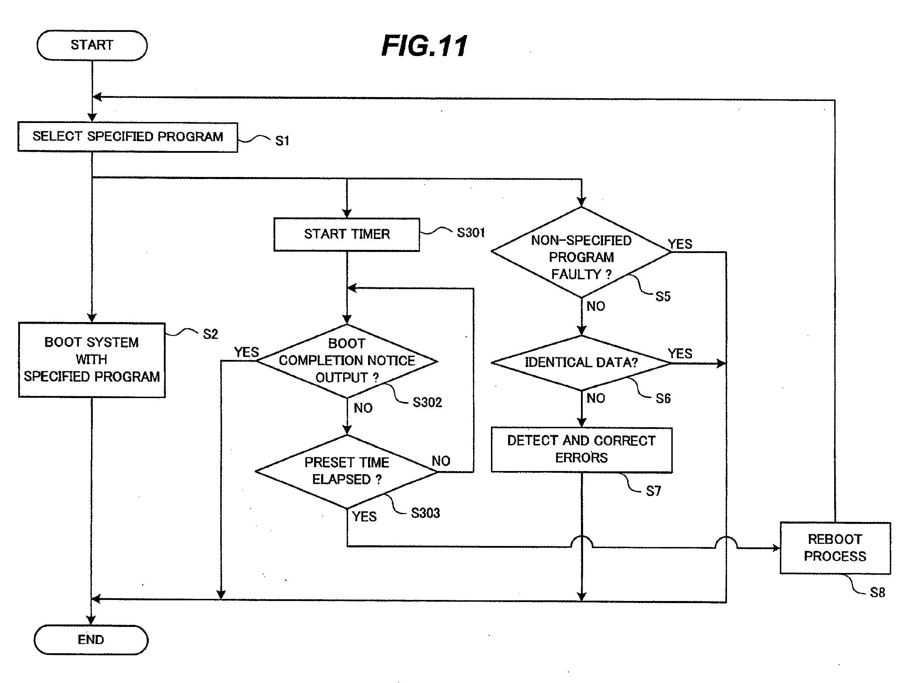

The operation of the information processing device in the third embodiment will now be described with reference to FIG. 11.

Upon being released from the reset state, the CPU 4 executes the program selection process coded in the selection program 107 to select the specified program as the program to be used to boot the system (S1), as in the first embodiment.

The CPU 4 then executes the boot process coded in the selected specified program (S2), as in the first embodiment.

In parallel with the boot process in step S2, the CPU 4 detects faults in the specified program. In this embodiment, the CPU 4 detects a system boot failure as a fault in the specified program.

Specifically, when the execution of the specified program starts, the CPU 4 starts a timer to measure the time that elapses from the beginning of program execution (S301). The CPU 4 also checks whether a boot completion notice has been output from the boot unit 12 (S302). If the boot completion notice has been output (Yes in step S302), the fault detection process ends; if the boot completion notice has not been output (No in step S302), the time measured by the timer is checked to see whether it has reached the threshold time (S303). If the threshold time has not been reached (No in step S303), the processing returns to step S302; if the threshold time has been reached (Yes in step S303), a system boot failure is considered to have occurred and the processing proceeds to the reboot process (S8). In other words, if the threshold time elapses, as measured from the start of execution of the program, without output of a boot completion notice from the boot unit 12, the CPU 4 decides that the boot program is not operating normally and performs the reboot process. The reboot process is the same as in the first embodiment.

The CPU 4 performs the error correction process (steps S5 to S7) on the non-specified program in parallel with the boot process in step S2, as in the first embodiment.

Steps S301 to S303 in FIG. 11 are implemented by execution, by the CPU 4, of a fault detection process coded in the specified program. Steps S301 to S303 are the processing performed in the fault detection unit 13.

The effects (1) to (11) described earlier and the following effect (14) are obtained in the third embodiment.
(14) After system booting ends normally, if the information processing device obtains a new program from an external source, it replaces the non-specified program with the new program, updates the boot information to switch the specified program, and directs the boot unit to execute the boot process again. If the fault detection unit does not detect a fault (a system boot failure, in this embodiment), the corrective data are then replaced with the non-specified program. If a fault is detected, the specified program is again switched, and then the boot unit executes the boot process yet again. Thus when the program is updated, if the new program after the update fails to boot the system, the program formerly used for booting, before the update, can be restored. This prevents, for example, when the newly obtained program fails to boot the system normally because of a program bug or the like, a situation in which the former program cannot be restored and the system cannot be booted.

### Fourth Embodiment

A fourth embodiment will now be described. The information processing device in the fourth embodiment differs from the information processing device in the second embodiment only in that a system boot failure is detected as a program fault. The information processing device in the fourth embodiment is obtained by incorporating the fault detection unit of the third embodiment into the information processing device of the second embodiment.

The fault detection unit 13 in this embodiment detects a system boot failure as a fault in the specified program, as in the third embodiment.

The operation of the information processing device in the fourth embodiment will now be described with reference to FIG. 11.

Upon being released from the reset state, the CPU 4 executes the selection program 107, refers to the version information 106c and reboot flag 106d, and selects the specified program, as in the second embodiment, as the program used to boot the system (S1).

The CPU 4 executes the boot process coded in the selected specified program (S2), as in the second embodiment.

In parallel with the boot process in step S2, as a fault detection process, the CPU 4 detects system boot failures as in the third embodiment (S301 to S303). If a system boot failure is detected (Yes in step S303), it performs the reboot process (S8). The reboot process is the same as in the second embodiment.

In parallel with the boot process in step S2, the CPU 4 also performs the error correction process on the non-specified program (steps S5 to S7) in accordance with the version information 106c, reboot flag 106d, and error flag 106e as in the second embodiment.

The effects (1) to (10) and (12) to (14) described earlier are obtained in the fourth embodiment.

The present invention is not limited to the embodiments described above; a variety of other modes of implementation are within the scope of the invention.

For example, the program selection unit 10 is implemented by software in the description given above, but the program selection unit 10 may be implemented completely in hardware. The information processing device 1 may, for example, include a selector circuit for selecting a program. Upon being released from the reset state, the selector circuit may set the address of program 100 or program 102 in the CPU 4 in accordance with the control information 106, and the CPU 4 may access the address set by the selector circuit and execute the program stored there.

The program selection unit 10 may be omitted. For example, the information processing device 1 may be configured as follows. The information processing device 1 includes a register for holding a boot address. The register originally holds the address of program 100. Upon being released from the reset state, the CPU 4 accesses the address initially held in this register and executes program 100. If a fault is detected in program 100, the CPU 4 changes the boot address held in the register to the address of program 102 in the reboot process and executes a software reset. Following the software reset, the CPU 4 accesses the address held in the register, which is still the address of program 102, and executes program 102. The address held in the register accordingly functions as the boot information.

In the description given above, programs are loaded into the work memory 3 and executed from the work memory 3. The CPU 4 may execute programs directly from the nonvolatile memory 2, however, without loading them into the work memory 3. This scheme enables the size of the work memory 3 to be reduced.

In the program update process described above with reference to FIG. 8, when the system is booted with the newly installed program, if no fault is detected in the program (No in step S46), the corrective data 104 are replaced with the non-specified program (the program data that have not been replaced) (S47). In step S47, however, the corrective data 104 and the non-specified program may both be replaced with the specified program (the newly installed program). If the program is executed directly from the nonvolatile memory 2 without being loaded into the work memory 3, however, the process illustrated in FIG. 8 is more useful, because it is difficult for the program used for booting to copy itself or to overwrite itself onto another program.

The information processing device 1 may detect both bit errors and boot failures as program faults. In that case, the information processing device 1 performs the reboot process when, for example, it detects at least one bit error or detects a boot failure.

In the description given above, the program to be used to boot the system is switched by changing the boot information 106a to change the block (program data area) accessed in booting. In an alternative scheme, however, when a fault is detected in program 100, program 100 is replaced (by being overwritten) with program 102, and program 100 after the replacement is used for rebooting. That is, the information processing device 1 may switch the program to be used to boot the system by overwriting it.

The boot unit 12 and fault detection unit 13 described above are implemented by execution of the same boot program by the same CPU 4. The fault detection unit 13 may also be implemented, however, in the following forms (a) to (d).
(a) The fault detection unit 13 may be implemented by execution, by the CPU 4, of a separate fault detection program instead of a fault detection process coded in the program for booting.
(b) The fault detection unit 13 may be implemented by a CPU other than the CPU 4. The other CPU executes a fault detection process coded either in the program for booting or in a separate fault detection program.
(c) The CPU 4 may include a plurality of processor cores, and the boot unit 12 and fault detection unit 13 may be implemented by different processor cores. Thus while one or more processor cores are booting the system, one or more other processor cores execute a fault detection process coded either in the program for booting or in a separate fault detection program.
(d) The fault detection unit 13 may be implemented by a hardware circuit that detects faults.

If the boot process and fault detection process are executed in parallel by different hardware devices as in (b) to (d) above, the boot process and fault detection process can be truly concurrent, and the boot time can be greatly reduced in comparison with a configuration in which the boot process does not start until after error detection has been carried out on the program for booting.

Like the fault detection unit 13, the error correction unit 14, reboot unit 15, and replacement control unit 16 may also be implemented in the forms (a) to (d) described above.

The programs used in the first to fourth embodiments and in the alternative forms (a) to (d) described above may be provided on computer-readable recording media such as flash memories or optical discs, and may also be provided through communication networks such as the Internet.

Those skilled in the art will recognize that further variations are possible within the scope of the invention, which is defined in the appended claims.

## Claims

1. An information processing device (1) comprising:
a nonvolatile memory (2) having a first program data area (B1) storing first program data (100) for booting a system, a second program data area (B2) storing second program data (102) for booting the system, and a corrective data area (B3) storing corrective data (104) identical in content to one of the first program data (100) and the second program data (102) for use when a fault is detected in the other one of the first program data (100) and the second program data (102);
the nonvolatile memory (2) further having means for storing boot information (106a, 106c, 106d) specifying the first program data (100) or the second program data (102) as program data to use in booting the system, the boot information (106a, 106c, 106d) being preset to specify the other one of the first program data (100) and the second program data (102);
a boot unit (12) for booting the system by executing the program data specified by the boot information (106a, 106c, 106d);
a fault detection unit (13) for detecting faults in the specified program data in parallel with the booting of the system by the boot unit (12);
an error correction unit (14) for deciding, in parallel with the booting of the system by the boot unit (12), whether the corrective data (104) agree with non-specified program data, the non-specified program data being first program data (100) or second program data (102) that are not specified by the boot information (106a, 106c, 106d), detecting bit errors in the corrective data (104) and the non-specified program data if the corrective data (104) and the non-specified program data do not agree, and when a bit error is detected in one of the corrective data (104) and the non-specified program data, using the data in which the bit error was not detected to correct the data in which the bit error was detected; and
a reboot unit (15) for, when the fault detection unit (13) detects a fault in the specified program data, updating the boot information (106a, 106c, 106d), thereby switching the specified program data, and then directing the boot unit (12) to boot the system.

2. The information processing device (1) of claim 1, further comprising a selection unit (10) for selecting the program data used to boot the system from among the first and second program data (100, 102) based on the boot information (106a, 106c, 106d), wherein the boot unit (12) executes the program data selected by the selection unit (10) to boot the system.

3. The information processing device (1) of claim 1 or 2, wherein:
the information processing device (1) stores fault information (106b) indicating whether there is, in the first and second program data (100, 102), a fault detected by the fault detection unit (13) or a bit error detected but not corrected by the error correction unit (14); and
when the fault detection unit (13) detects a fault in the specified program data, the reboot unit (15) updates the boot information (106a) and directs the boot unit (12) to boot the system only when the fault information (106b) indicates that the non-specified program data are free of faults and bit errors.

4. The information processing device (1) of claim 3 wherein, when the fault detection unit (13) detects a fault in the specified program data, if the fault information (106b) indicates that the non-specified program data include a fault or a bit error, the reboot unit (15) obtains new program data for booting the system, the new program data not being already stored in the nonvolatile memory (2), and replaces at least one of the first program data (100) and the second program data (102) with the new program data.

5. The information processing device (1) of claim 1 or 2, wherein:
the storage unit (2) stores version information (106c) and reboot information (106d) as the boot information, the version information (106c) indicating respective versions of the first and second program data (100, 102), the reboot information (106d) being updated by the reboot unit (15);
on the basis of the version information (106c) and the reboot information (106d), when the reboot information (106d) has not been updated, the boot unit (12) executes a one of the first and second program data (100, 102) having version information satisfying a predetermined condition, and when the reboot information (106d) has been updated, the boot unit (12) executes a one of the first and second program data (100, 102) having version information not satisfying the predetermined condition; and
when the fault detection unit (13) detects a fault in the specified program data, if the reboot information (106d) has not been updated, the reboot unit (15) updates the reboot information (106d) and then directs the boot unit (12) to boot the system.

6. The information processing device (1) of claim 5, wherein:
the information processing device (1) stores error information (106e) indicating whether there is, in the first and second program data (100, 102), a bit error detected but not corrected by the error correction unit (14); and
when the fault detection unit (13) detects a fault in the specified program data, if the reboot information (106d) has not been updated and the error information (106e) indicates that no bit errors are present, the reboot unit (15) updates the reboot information (106d) and directs the boot unit (12) to boot the system.

7. The information processing device (1) of claim 6 wherein, when the fault detection unit (13) detects a fault in the specified program data, if the reboot information (106d) has been updated or the error information (106e) indicates that a bit error is present, the reboot unit (15) obtains new program data for booting the system, the new program data not already being stored in the nonvolatile memory (2), and replaces at least one of the first program data (100) and the second program data (102) with the new program data.

8. The information processing device (1) of any one of claims 1 to 7, wherein after normal termination of the booting of the system by the boot unit (12), the information processing device (1) obtains new program data for booting the system, the new program data not already being stored in the nonvolatile memory (2), replaces the non-specified program data with the new program data, updates the boot information (106a, 106c, 106d), thereby switching the specified program data, and then directs the boot unit (12) to boot the system, and wherein if the fault detection unit (13) does not then detect a fault during the booting of the system, replaces the corrective data (104) with the non-specified program data, but if the fault detection unit (13) detects a fault, updates the boot information (106a, 106c, 106d), thereby switching the specified program data, and then directs the boot unit (12) to boot the system.

9. The information processing device (1) of any one of claims 1 to 8, wherein the fault detection unit (13) detects bit errors as the faults in the specified program data.

10. The information processing device (1) of any one of claims 1 to 9, wherein the fault detection unit (13) detects a failure of the booting of the system as a fault in the specified program data.

11. An information processing method comprising:
booting a system by executing program data specified by boot information (106a, 106c, 106d), the specified program data being stored in a nonvolatile memory (2), the nonvolatile memory (2) having a first program data area (B1) storing first program data (100) for booting the system, a second program data area (B2) storing second program data (102) for booting the system, and a corrective data area (B3) storing corrective data (104) identical in content to one of the first program data (100) and the second program data (102) for use when a fault is detected in the other one of the first program data (100) and the second program data (102), the boot information (106a, 106c, 106d) specifying the first program data (100) or the second program data (102) as program data to use in booting the system and being preset to specify the other one of the first program data (100) and the second program data (102);
detecting faults in the specified program data in parallel with the booting of the system;
deciding, in parallel with the booting of the system, whether the corrective data (104) agree with non-specified program data, the non-specified program data being first program data (100) or second program data (102) that are not specified by the boot information (106a, 106c, 106d), detecting bit errors in the corrective data (104) and the non-specified program data if the corrective data (104) and the non-specified program data do not agree, and when a bit error is detected in one of the corrective data (104) and the non-specified program data, using the data in which the bit error was not detected to correct the data in which the bit error was detected; and
updating the boot information (106a, 106c, 106d), thereby switching the specified program data, when a fault is detected in the specified program data, and then booting the system again by executing the specified program data.

12. A program executable by a computer to carry out:
a boot process for booting a system by executing program data specified by boot information (106a, 106c, 106d), the specified program data being stored in a nonvolatile memory (2), the nonvolatile memory (2) having a first program data area (B1) storing first program data (100) for booting the system, a second program data area (B2) storing second program data (102) for booting the system, and a corrective data area (B3) storing corrective data (104) identical in content to one of the first program data (100) and the second program data (102) for use when a fault is detected in the other one of the first program data (100) and the second program data (102), the boot information (106a, 106c, 106d) specifying the first program data (100) or the second program data (102) as program data to use in booting the system and being preset to specify the other one of the first program data (100) and the second program data (102);
a fault detection process for detecting faults in the specified program data in parallel with the booting of the system;
an error correction process for deciding, in parallel with the booting of the system, whether the corrective data (104) agree with non-specified program data, the non-specified program data being first program data (100) or second program data (102) that are not specified by the boot information (106a, 106c, 106d), detecting bit errors in the corrective data (104) and the non-specified program data if the corrective data (104) and the non-specified program data do not agree, and when a bit error is detected in one of the corrective data (104) and the non-specified program data, using the data in which the bit error was not detected to correct the data in which the bit error was detected; and
a reboot process for updating the boot information (106a, 106c, 106d), thereby switching the specified program data, when the fault detection process detects a fault in the specified program data, and then booting the system again by executing the specified program data.

## Patentansprüche

1. Informationsverarbeitungsvorrichtung (1), umfassend:
einen nicht-flüchtigen Speicher (2), der einen ersten Programmdatenbereich (B1) aufweist, der erste Programmdaten (100) zum Booten eines Systems speichert, sowie einen zweiten Programmdatenbereich (B2), der zweite Programmdaten (102) zum Booten des Systems speichert, und einen korrigierenden Datenbereich (B3), der korrigierende Daten (104) speichert, die im Inhalt mit einen von den ersten Programmdaten (100) und den zweiten Programmdaten (102) identisch sind, zur Verwendung, wenn ein Fehler in den anderen von den ersten Programmdaten (100) und den zweiten Programmdaten (102) erfasst wird;
wobei der nicht-flüchtige Speicher (2) ferner ein Mittel aufweist zum Speichern einer Boot-Information (106a, 106c, 106d), die die ersten Programmdaten (100) oder die zweiten Programmdaten (102) als Programmdaten zur Verwendung beim Booten des Systems spezifiziert, wobei die Boot-Information (106a, 106c, 106d) vorab eingestellt wird, um die anderen von den ersten Programmdaten (100) mit den zweiten Programmdaten (102) zu spezifizieren;
eine Boot-Einheit (12) zum Booten des Systems durch Ausführen der Programmdaten, die durch die Boot-Information (106a, 106c, 106d) spezifiziert werden;
eine Fehlererfassungseinheit (13) zum Erfassen von Fehlern in den spezifizierten Programmdaten parallel mit dem Booten des Systems durch die Boot-Einheit (12);
eine Fehlererfassungseinheit (14) zum Entscheiden, parallel mit dem Booten des Systems durch die Boot-Einheit (12), ob die korrigierenden Daten (104) mit den nicht-spezifizierten Programmdaten übereinstimmen, wobei die nicht-spezifizierten Programmdaten erste Programmdaten (100) oder zweite Programmdaten (102) sind, die durch die Boot-Information (106a, 106c, 106d) nicht spezifiziert sind, sowie zum Erfassen von Bit-Fehlern in den korrigierenden Daten (104) und den nicht-spezifizierten Programmdaten, wenn die korrigierenden Daten (104) und die nicht-spezifizierten Programmdaten nicht übereinstimmen, und wenn ein Bit-Fehler in einem von den korrigierenden Daten (104) und den nicht-spezifizierten Programmdaten erfasst wird, die Daten verwendet werden, in denen der Bit-Fehler nicht erfasst wurde, um die Daten zu korrigieren, in denen der Bit-Fehler erfasst wurde; und
eine Reboot-Einheit (15) zum Aktualisieren der Boot-Information (106a, 106c, 106d), wenn die Fehlererfassungseinheit (13) einen Fehler in den spezifizierten Programmdaten erfasst, wodurch die spezifizierten Programmdaten gewechselt werden, und dann zum Anweisen der Boot-Einheit (12), das System zu booten.

2. Informationsverarbeitungsvorrichtung (1) nach Anspruch 1, ferner mit einer Auswahleinheit (10) zum Auswählen der Programmdaten, die zum Booten des Systems verwendet werden, unter den ersten und zweiten Programmdaten (100, 102) basierend auf der Boot-Information (106a, 106c, 106d), wobei die Boot-Einheit (12) die Programmdaten ausführt, die durch die Auswahleinheit (10) ausgewählt werden, um das System zu booten.

3. Informationsverarbeitungsvorrichtung (1) nach Anspruch 1 oder 2, wobei:
die Informationsverarbeitungsvorrichtung (1) eine Fehlerinformation (106b) speichert, die anzeigt, ob es in den ersten und zweiten Programmdaten (100, 102) einen Fehler gibt, der durch die Fehlererfassungseinheit (13) erfasst wird, oder einen Bit-Fehler, der erfasst wird, jedoch nicht durch die Fehlerkorrektureinheit (14) korrigiert wurde; und
wenn die Fehlererfassungseinheit (13) einen Fehler in den spezifizierten Programmdaten erfasst, die Reboot-Einheit (15) die Boot-Information (106a) aktualisiert und die Boot-Einheit (12) anweist, das System nur dann zu booten, wenn die Fehlerinformation (106b) anzeigt, dass die nicht-spezifizierten Programmdaten frei von Fehlern und Bit-Fehlern sind.

4. Informationsverarbeitungsvorrichtung (1) nach Anspruch 3, wobei dann, wenn die Fehlererfassungseinheit (13) einen Fehler in den spezifizierten Programmdaten erfasst, wenn die Fehlerinformation (106b) anzeigt, dass die nicht-spezifizierten Programmdaten einen Fehler oder einen Bit-Fehler enthalten, die Reboot-Einheit (15) neue Programmdaten zum Booten des Systems erhält, wobei die neuen Programmdaten nicht bereits in dem nicht-flüchtigen Speicher (2) gespeichert sind, und zumindest eine von den ersten Programmdaten (100) und den zweiten Programmdaten (102) mit den neuen Programmdaten ersetzt.

5. Informationsverarbeitungsvorrichtung (1) nach Anspruch 1 oder 2, wobei:
die Speichereinheit (2) eine Versionsinformation (106c) und eine Reboot-Information (106d) als die Boot-Information speichert, wobei die Versionsinformation (106c) jeweilige Versionen der ersten und zweiten Programmdaten (100, 102) anzeigt, wobei die Reboot-Information (106d) durch die Reboot-Einheit (15) aktualisiert wird;
auf Grundlage der Versionsinformation (106c) und der Reboot-Information (106d), wenn die Reboot-Information (106d) nicht aktualisiert wurde, die Boot-Einheit (12) eine von den ersten und zweiten Programmdaten (100, 102) ausführt, die eine Versionsinformation aufweisen, die eine vorbestimmte Bedingung erfüllen, und wenn die Reboot-Information (106d) aktualisiert wurde, die Boot-Einheit (12) eines von den ersten und zweiten Programmdaten (100, 102) ausführt, die eine Versionsinformation aufweisen, die die vorbestimmte Bedingung nicht erfüllen; und
wenn die Fehlererfassungseinheit (13) einen Fehler in den spezifizierten Programmdaten erfasst, wenn die Reboot-Information (106d) nicht aktualisiert wurde, die Reboot-Einheit (15) die Reboot-Information (106d) aktualisiert und dann die Boot-Einheit (12) anweist, das System zu booten.

6. Informationsverarbeitungsvorrichtung (1) nach Anspruch 5, wobei:
die Informationsverarbeitungsvorrichtung (1) eine Fehlerinformation (106d) speichert, die anzeigt, ob es in den ersten und zweiten Programmdaten (100, 102) einen Bit-Fehler gibt, der erfasst wurde, jedoch durch die Fehlerkorrektureinheit (14) nicht korrigiert wurde; und
wenn die Fehlererfassungseinheit (13) einen Fehler in den spezifizierten Programmdaten erfasst, wenn die Reboot-Information (106d) nicht aktualisiert wurde und die Fehlerinformation (106d) anzeigt, dass keine Bit-Fehler vorhanden sind, die Reboot-Einheit (15) die Reboot-Information (106d) aktualisiert und die Boot-Einheit (12) anweist, das System zu booten.

7. Informationsverarbeitungsvorrichtung (1) nach Anspruch 6, wobei dann, wenn die Fehlererfassungseinheit (13) einen Fehler in den spezifizierten Programmdaten erfasst, wenn die Reboot-Information (106d) aktualisiert wurde, oder die Fehlerinformation (106e) anzeigt, dass ein Bit-Fehler vorhanden ist, die Reboot-Einheit (15) neue Programmdaten zum Booten des Systems erhält, wobei die neuen Programmdaten nicht bereits in dem nicht-flüchtigen Programmspeicher (2) gespeichert sind, und zumindest eines von den ersten Programmdaten (100) und den zweiten Programmdaten (102) mit den neuen Programmdaten ersetzt.

8. Informationsverarbeitungsvorrichtung (1) nach einem der Ansprüche 1 bis 7, wobei nach einer normalen Beendigung des Bootens des Systems durch die Boot-Einheit (12) die Informationsverarbeitungsvorrichtung (1) neue Programmdaten zum Booten des Systems erhält, wobei die neuen Programmdaten nicht bereits in dem nicht-flüchtigen Speicher (2) gespeichert sind, die nicht-spezifizierten Programmdaten mit den neuen Programmdaten ersetzt, die Boot-Information (106a, 106c, 106d) aktualisiert, wodurch die spezifizierten Programmdaten gewechselt werden, und dann die Boot-Einheit (12) anweist, das System zu booten, und wobei dann, wenn die Fehlererfassungseinheit (13) dann keinen Fehler während des Bootens des Systems erfasst, die korrigierenden Daten (104) mit den nicht-spezifizierten Programmdaten ersetzt, wenn jedoch die Fehlererfassungseinheit (13) einen Fehler erfasst, die Boot-Information (106a, 106c, 106d) aktualisiert, wodurch die spezifizierten Programmdaten gewechselt werden, und dann die Boot-Einheit (12) anweist, das System zu booten.

9. Informationsverarbeitungsvorrichtung (1) nach einem der Ansprüche 1 bis 8, wobei die Fehlererfassungseinheit (13) Bit-Fehler als die Fehler in den spezifizierten Programmdaten erfasst.

10. Informationsverarbeitungsvorrichtung (1) nach einem der Ansprüche 1 bis 9, wobei die Fehlererfassungseinheit (13) einen Fehler des Bootens des Systems als einen Fehler in den spezifizierten Programmdaten erfasst.

11. Informationsverarbeitungsverfahren, umfassend:
Booten eines Systems durch Ausführen von Programmdaten, die durch eine Boot-Information (106a, 106c, 106d) spezifiziert werden, wobei die spezifizierten Programmdaten in einem nicht-flüchtigen Speicher (2) gespeichert sind, wobei der nicht-flüchtige Speicher (2) einen ersten Programmdatenbereich (B1) aufweist, der erste Programmdaten (100) zum Booten des Systems speichert, sowie einen zweiten Programmdatenbereich (B2), der zweite Programmdaten (102) zum Booten des Systems speichert, und einen Korrekturdatenbereich (B3), der Korrekturdaten (104) speichert, die im Inhalt identisch zu einem von den ersten Programmdaten (100) und den zweiten Programmdaten (102) sind, für eine Verwendung, wenn ein Fehler in den anderen von den ersten Programmdaten (100) und den zweiten Programmdaten (102) erfasst wird; wobei die Boot-Information (106a, 106c, 106d) die ersten Programmdaten (100) oder die zweiten Programmdaten (102) als Programmdaten spezifiziert, die beim Booten des Systems verwendet werden und vorab eingestellt wird, um die anderen von den ersten Programmdaten (100) und den zweiten Programmdaten (102) zu spezifizieren;
Erfassen von Fehlern in den spezifizierten Programmdaten parallel mit dem Booten des Systems;
Entscheiden, parallel mit dem Booten des Systems, ob die Korrekturdaten (104) mit nicht-spezifizierten Programmdaten übereinstimmen, wobei die nicht-spezifizierten Programmdaten erste Programmdaten (100) oder zweite Programmdaten (102) sind, die durch die Boot-Information (106a, 106c, 106d) nicht spezifiziert sind, sowie Erfassen von Bit-Fehlern in den Korrekturdaten (104) und den nicht-spezifizierten Programmdaten, wenn die Korrekturdaten (104) und die nicht-spezifizierten Programmdaten nicht übereinstimmen, und wenn ein Bit-Fehler in einem von den Korrekturdaten (104) und den nicht-spezifizierten Programmdaten erfasst wird, Verwenden der Daten, in denen der Bit-Fehler nicht erfasst wurde, um die Daten zu korrigieren, in denen der Bit-Fehler erfasst wurde; und
Aktualisieren der Boot-Information (106a, 106c, 106d), wodurch die spezifizierten Programmdaten gewechselt werden, wenn ein Fehler in den spezifizierten Programmdaten erfasst wird, und dann ein erneutes Booten des Systems durch Ausführen der spezifizierten Programmdaten.

12. Programm, das durch einen Computer ausführbar ist, um auszuführen:
einen Boot-Prozess zum Booten eines Systems durch Ausführen von Programmdaten, die durch eine Boot-Information (106a, 106c, 106d) spezifiziert sind, wobei die spezifizierten Programmdaten in einem nicht-flüchtigen Speicher (2) gespeichert sind, wobei der nicht-flüchtige Speicher (2) einen ersten Programmdatenbereich (B1) aufweist, der erste Programmdaten (100) zum Booten des Systems speichert, sowie einen zweiten Programmdatenbereich (B2), der zweite Programmdaten (102) zum Booten des Systems speichert, und einen Korrekturdatenbereich (B3), der Korrekturdaten (104) speichert, die im Inhalt identisch zu einem von den ersten Programmdaten (100) und den zweiten Programmdaten (102) sind, für eine Verwendung, wenn ein Fehler in den anderen von den ersten Programmdaten (100) und den zweiten Programmdaten (102) erfasst wird; wobei die Boot-Information (106a, 106c, 106d) die ersten Programmdaten (100) oder die zweiten Programmdaten (102) als Programmdaten zur Verwendung beim Booten des Systems spezifiziert, und vorab einstellt, um die anderen von den ersten Programmdaten (100) und den zweiten Programmdaten (102) zu spezifizieren;
einen Fehlererfassungsprozess zum Erfassen von Fehlern in den spezifizierten Programmdaten parallel mit dem Booten des Systems;
einen Fehlerkorrekturprozess zum Entscheiden, parallel mit dem Booten des Systems, ob die Korrekturdaten (104) mit nicht-spezifizierten Programmdaten übereinstimmen, wobei die nicht-spezifizierten Programmdaten erste Programmdaten (100) oder zweite Programmdaten (102) sind, die durch die Boot-Information (106a, 106c, 106d) nicht spezifiziert sind, sowie zum Erfassen von Bit-Fehlern in den Korrekturdaten (104) und den nicht-spezifizierten Programmdaten, wenn die Korrekturdaten (104) und die nicht-spezifizierten Programmdaten nicht übereinstimmen, und wenn ein Bit-Fehler in einem von den Korrekturdaten (104) und den nicht-spezifizierten Programmdaten erfasst wird, Verwendung der Daten, in denen der Bit-Fehler nicht erfasst wurde, um die Daten zu korrigieren, in denen der Bit-Fehler erfasst wurde; und
einen Reboot-Prozess zum Aktualisieren der Boot-Information (106a, 106c, 106d), wodurch die spezifizierten Programmdaten gewechselt werden, wenn der Fehlererfassungsprozess einen Fehler in den spezifizierten Programmdaten erfasst, und danach zum erneuten Booten des Systems durch Ausführen der spezifizierten Programmdaten.

## Revendications

1. Dispositif de traitement d'informations (1) comprenant :
une mémoire non volatile (2) ayant une première zone de données de programme (B1) stockant des premières données de programme (100) pour amorcer un système, une seconde zone de données de programme (B2) stockant des secondes données de programme (102) pour amorcer le système, et une zone de données correctives (B3) stockant des données correctives (104) de contenu identique à une des premières données de programme (100) et des secondes données de programme (102) pour une utilisation quand un défaut est détecté dans l'autre des premières données de programme (100) et des secondes données de programme (102) ;
la mémoire non volatile (2) ayant en outre des moyens pour stocker des informations d'amorçage (106a, 106c, 106d) spécifiant les premières données de programme (100) ou les secondes données de programme (102) comme données de programme à utiliser dans l'amorçage du système, les informations d'amorçage (106a, 106c, 106d) étant préétablies pour spécifier l'autre des premières données de programme (100) et des secondes données de programme (102) ;
une unité d'amorçage (12) pour amorcer le système en exécutant les données de programme spécifiées par les informations d'amorçage (106a, 106c, 106d) ;
une unité de détection de défaut (13) pour détecter des défauts dans les données de programme spécifiées en parallèle avec l'amorçage du système par l'unité d'amorçage (12) ;
une unité de correction d'erreur (14) pour décider, en parallèle avec l'amorçage du système par l'unité d'amorçage (12), si les données correctives (104) concordent avec des données de programme non spécifiées, les données de programme non spécifiées étant des premières données de programme (100) ou des secondes données de programme (102) qui ne sont pas spécifiées par les informations d'amorçage (106a, 106c, 106d), détecter des erreurs de bit dans les données correctives (104) et les données de programme non spécifiées si les données correctives (104) et les données de programme non spécifiées ne concordent pas, et lorsqu'une erreur de bit est détectée dans une des données correctives (104) et des données de programme non spécifiées, utiliser les données dans lesquelles l'erreur de bit n'a pas été détectée pour corriger les données dans lesquelles l'erreur de bit a été détectée ; et
une unité de réamorçage (15) pour, lorsque l'unité de détection de défaut (13) détecte un défaut dans les données de programme spécifiées, mettre à jour les informations d'amorçage (106a, 106c, 106d), commutant ainsi les données de programme spécifiées, et diriger ensuite l'unité d'amorçage (12) pour amorcer le système.

2. Dispositif de traitement d'informations (1) selon la revendication 1, comprenant en outre une unité de sélection (10) pour sélectionner les données de programme utilisées pour amorcer le système parmi les premières et secondes données de programme (100, 102) sur la base des informations d'amorçage (106a, 106c, 106d), dans lequel l'unité d'amorçage (12) exécute les données de programme sélectionnées par l'unité de sélection (10) pour amorcer le système.

3. Dispositif de traitement d'informations (1) selon la revendication 1 ou 2, dans lequel :
le dispositif de traitement d'informations (1) stocke des informations de défaut (106b) indiquant s'il y a, dans les premières et secondes données de programme (100, 102), un défaut détecté par l'unité de détection de défaut (13) ou une erreur de bit détectée mais non corrigée par l'unité de correction d'erreur (14) ; et
lorsque l'unité de détection de défaut (13) détecte un défaut dans les données de programme spécifiées, l'unité de réamorçage (15) met à jour les informations d'amorçage (106a) et dirige l'unité d'amorçage (12) pour amorcer le système uniquement lorsque les informations de défaut (106b) indiquent que les données de programme non spécifiées sont exemptes de défauts et d'erreurs de bit.

4. Dispositif de traitement d'informations (1) selon la revendication 3, dans lequel, lorsque l'unité de détection de défaut (13) détecte un défaut dans les données de programme spécifiées, si les informations de défaut (106b) indiquent que les données de programme non spécifiées comprennent un défaut ou une erreur de bit, l'unité de réamorçage (15) obtient de nouvelles données de programme pour amorcer le système, les nouvelles données de programme n'étant pas déjà stockées dans la mémoire non volatile (2), et remplace au moins une des premières données de programme (100) et des secondes données de programme (102) par les nouvelles données de programme.

5. Dispositif de traitement d'informations (1) selon la revendication 1 ou 2, dans lequel :
l'unité de stockage (2) stocke des informations de version (106c) et des informations de réamorçage (106d) comme les informations d'amorçage, les informations de version (106c) indiquant des versions respectives des premières et secondes données de programme (100, 102), les informations de réamorçage (106d) étant mises à jour par l'unité de réamorçage (15) ;
sur la base des informations de version (106c) et des informations de réamorçage (106d), lorsque les informations de réamorçage (106d) n'ont pas été mises à jour, l'unité d'amorçage (12) exécute une des premières et secondes données de programme (100, 102) ayant des informations de version satisfaisant à une condition prédéterminée, et lorsque les informations de réamorçage (106d) ont été mises à jour, l'unité d'amorçage (12) exécute une des premières et secondes données de programme (100, 102) ayant des informations de version ne satisfaisant pas à la condition prédéterminée ; et
lorsque l'unité de détection de défaut (13) détecte un défaut dans les données de programme spécifiées, si les informations de réamorçage (106d) n'ont pas été mises à jour, l'unité de réamorçage (15) met à jour les informations de réamorçage (106d) et dirige ensuite l'unité d'amorçage (12) pour amorcer le système.

6. Dispositif de traitement d'informations (1) selon la revendication 5, dans lequel :
le dispositif de traitement d'informations (1) stocke des informations d'erreur (106e) indiquant s'il y a, dans les premières et secondes données de programme (100, 102), une erreur de bit détectée mais non corrigée par l'unité de correction d'erreur (14) ; et
lorsque l'unité de détection de défaut (13) détecte un défaut dans les données de programme spécifiées, si les informations de réamorçage (106d) n'ont pas été mises à jour et que les informations d'erreur (106e) indiquent qu'aucune erreur de bit n'est présente, l'unité de réamorçage (15) met à jour les informations de réamorçage (106d) et dirige l'unité d'amorçage (12) pour amorcer le système.

7. Dispositif de traitement d'informations (1) selon la revendication 6, dans lequel, lorsque l'unité de détection de défaut (13) détecte un défaut dans les données de programme spécifiées, si les informations de réamorçage (106d) ont été mises à jour ou que les informations d'erreur (106e) indiquent qu'une erreur de bit est présente, l'unité de réamorçage (15) obtient de nouvelles données de programme pour amorcer le système, les nouvelles données de programme n'étant pas déjà stockées dans la mémoire non volatile (2), et remplace au moins une des premières données de programme (100) et des secondes données de programme (102) par les nouvelles données de programme.

8. Dispositif de traitement d'informations (1) selon l'une quelconque des revendications 1 à 7, dans lequel après la fin normale de l'amorçage du système par l'unité d'amorçage (12), le dispositif de traitement d'informations (1) obtient de nouvelles données de programme pour amorcer le système, les nouvelles données du programme n'étant pas déjà stockées dans la mémoire non volatile (2), remplace les données de programme non spécifiées par les nouvelles données du programme, met à jour les informations d'amorçage (106a, 106c, 106d), commutant ainsi les données de programme spécifiées, et dirige ensuite l'unité d'amorçage (12) pour amorcer le système, et dans lequel si l'unité de détection de défaut (13) ne détecte alors pas de défaut pendant l'amorçage du système, remplace les données correctives (104) par les données de programme non spécifiées, mais si l'unité de détection de défaut (13) détecte un défaut, met à jour les informations d'amorçage (106a, 106c, 106d), commutant ainsi les données de programme spécifiées, et dirige ensuite l'unité d'amorçage (12) pour amorcer le système.

9. Dispositif de traitement d'informations (1) selon l'une quelconque des revendications 1 à 8, dans lequel l'unité de détection de défaut (13) détecte des erreurs de bit comme les défauts dans les données de programme spécifiées.

10. Dispositif de traitement d'informations (1) selon l'une quelconque des revendications 1 à 9, dans lequel l'unité de détection de défaut (13) détecte une défaillance de l'amorçage du système comme un défaut dans les données de programme spécifiées.

11. Procédé de traitement d'informations comprenant :
l'amorçage d'un système en exécutant des données de programme spécifiées par des informations d'amorçage (106a, 106c, 106d), les données de programme spécifiées étant stockées dans une mémoire non volatile (2), la mémoire non volatile (2) ayant une première zone de données de programme (B1) stockant des premières données de programme (100) pour amorcer le système, une seconde zone de données de programme (B2) stockant des secondes données de programme (102) pour amorcer le système, et une zone de données correctives (B3) stockant des données correctives (104) de contenu identique à une des premières données de programme (100) et des secondes données de programme (102) pour une utilisation quand un défaut est détecté dans l'autre des premières données de programme (100) et des secondes données de programme (102), les informations d'amorçage (106a, 106c, 106d) spécifiant les premières données de programme (100) ou les secondes données de programme (102) comme données de programme à utiliser dans l'amorçage du système et étant préétablies pour spécifier l'autre des premières données de programme (100) et des secondes données de programme (102) ;
la détection de défauts dans les données de programme spécifiées en parallèle avec l'amorçage du système ;
la décision, en parallèle avec l'amorçage du système, de si les données correctives (104) concordent avec des données de programme non spécifiées, les données de programme non spécifiées étant des premières données de programme (100) ou des secondes données de programme (102) qui ne sont pas spécifiées par les informations d'amorçage (106a, 106c, 106d), la détection d'erreurs de bit dans les données correctives (104) et les données de programme non spécifiées si les données correctives (104) et les données de programme non spécifiées ne concordent pas, et lorsqu'une erreur de bit est détectée dans une des données correctives (104) et des données de programme non spécifiées, l'utilisation des données dans lesquelles l'erreur de bit n'a pas été détectée pour corriger les données dans lesquelles l'erreur de bit a été détectée ; et
la mise à jour des informations d'amorçage (106a, 106c, 106d), commutant ainsi les données de programme spécifiées, lorsqu'un défaut est détecté dans les données de programme spécifiées, et ensuite l'amorçage du système à nouveau en exécutant les données de programme spécifiées.

12. Programme exécutable par un ordinateur pour effectuer :
un processus d'amorçage pour amorcer un système en exécutant des données de programme spécifiées par des informations d'amorçage (106a, 106c, 106d), les données de programme spécifiées étant stockées dans une mémoire non volatile (2), la mémoire non volatile (2) ayant une première zone de données de programme (B1) stockant des premières données de programme (100) pour amorcer le système, une seconde zone de données de programme (B2) stockant des secondes données de programme (102) pour amorcer le système, et une zone de données correctives (B3) stockant des données correctives (104) de contenu identique à une des premières données de programme (100) et des secondes données de programme (102) pour une utilisation quand un défaut est détecté dans l'autre des premières données de programme (100) et des secondes données de programme (102), les informations d'amorçage (106a, 106c, 106d) spécifiant les premières données de programme (100) ou les secondes données de programme (102) comme données de programme à utiliser dans l'amorçage du système et étant préétablies pour spécifier l'autre des premières données de programme (100) et des secondes données de programme (102) ;
un processus de détection de défaut pour détecter des défauts dans les données de programme spécifiées en parallèle avec l'amorçage du système ;
un processus de correction d'erreur pour décider, en parallèle avec l'amorçage du système, si les données correctives (104) concordent avec des données de programme non spécifiées, les données de programme non spécifiées étant des premières données de programme (100) ou des secondes données de programme (102) qui ne sont pas spécifiées par les informations d'amorçage (106a, 106c, 106d), détecter des erreurs de bit dans les données correctives (104) et les données de programme non spécifiées si les données correctives (104) et les données de programme non spécifiées ne concordent pas, et lorsqu'une erreur de bit est détectée dans une des données correctives (104) et des données de programme non spécifiées, utiliser les données dans lesquelles l'erreur de bit n'a pas été détectée pour corriger les données dans lesquelles l'erreur de bit a été détectée ; et
un processus de réamorçage pour mettre à jour les informations d'amorçage (106a, 106c, 106d), commutant ainsi les données de programme spécifiées, lorsque le processus de détection de défaut détecte un défaut dans les données de programme spécifiées, et amorcer ensuite le système à nouveau en exécutant les données de programme spécifiées.
